(19) Europäisches Patentamt
European Patent Office
Office européen des brevets

(11) EP 4 015 552 A1

(12) **EUROPEAN PATENT APPLICATION**

(43) Date of publication:
**22.06.2022 Bulletin 2022/25**

(21) Application number: **21214702.9**

(22) Date of filing: **15.12.2021**

(51) International Patent Classification (IPC):
***C08G 18/08*** *(2006.01)* ***C08G 18/28*** *(2006.01)*
***C08G 18/62*** *(2006.01)* ***C08G 18/70*** *(2006.01)*
***C08G 18/73*** *(2006.01)* ***C08G 18/78*** *(2006.01)*
***C08G 18/79*** *(2006.01)* ***C09D 175/04*** *(2006.01)*

(52) Cooperative Patent Classification (CPC):
**C08G 18/792; C08G 18/0828; C08G 18/283; C08G 18/6229; C08G 18/706; C08G 18/73; C08G 18/7837; C09D 175/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2020 JP 2020210347**
**10.12.2021 JP 2021200894**

(71) Applicant: **Asahi Kasei Kabushiki Kaisha**
**Tokyo 1000006 (JP)**

(72) Inventors:
- **HONG, Changfeng**
**Tokyo, 100-0006 (JP)**
- **SUZUKI, Mio**
**Tokyo, 100-0006 (JP)**
- **FUKUCHI, Takashi**
**Tokyo, 100-0006 (JP)**

(74) Representative: **Strehl Schübel-Hopf & Partner**
**Maximilianstrasse 54**
**80538 München (DE)**

(54) **POLYISOCYANATE COMPOSITION, WATER-BASED COATING COMPOSITION AND COATED SUBSTRATE**

(57) The invention provides a polyisocyanate composition that exhibits favorable viscosity change, good pot life when used in a water-based coating composition, and excellent drying properties, gloss, hardness, water resistance and salt water spray resistance when used in a coating film.

The polyisocyanate composition contains a polyisocyanate derived from at least one diisocyanate selected from the group consisting of aliphatic diisocyanates and alicyclic diisocyanates, wherein among the bonded groups derived from isocyanate groups within the polyisocyanate, the mole fraction of isocyanurate groups is the highest, the ratio of the mass fraction (B) of polyisocyanate for which the number average molecular weight is at least 400 but not more than 700, relative to the mass fraction (A) of polyisocyanate for which the number average molecular weight is at least 200 but less than 400, is within a range from 1 to 150, and the mass fraction of polyisocyanate for which the number average molecular weight is 1,000 or greater, relative to the total mass of the polyisocyanate composition, is within a range from 5 to 20% by mass.



Processed by Luminess, 75001 PARIS (FR)

## Description

TECHNICAL FIELD

The present invention relates to a polyisocyanate composition, a water-based coating composition, and a coated substrate.

BACKGROUND ART

In recent years, from the viewpoint of environmental protection, conversion of the types of ambient-temperature crosslinking two-liquid urethane coating compositions used as conventional solvent-based coating materials to water-based forms has become increasingly desirable. However, the polyisocyanates used as curing agents in two-liquid urethane coating compositions suffer from various problems, including being difficult to disperse in water, and prone to reaction with water, generating carbon dioxide. Accordingly, there has been much development of polyisocyanates having superior emulsifiability, wherein reaction between the isocyanate groups and water is suppressed in a water-dispersed state.

For example, Patent Documents 1 and 2 disclose polyisocyanate mixtures in which introduction of a specific ethylene oxide unit into the polyisocyanate enables the polyisocyanate to be dispersed in water.

Further, Patent Documents 3 and 4 disclose curing agents for water-based two-component curable resins, in which incorporation of a polyisocyanate having a specific structure and a specific viscosity imparts the curing agent with compatibility with the water-based main agent.

PRIOR ART LITERATURE

Patent Documents

Patent Document 1: Japanese Unexamined Patent Application, First Publication No. Hei 5-222150

Patent Document 2: Japanese Unexamined Patent Application, First Publication No. Hei 9-328654

Patent Document 3: Japanese Unexamined Patent Application, First Publication No. Hei 2-105879

Patent Document 4: Japanese Unexamined Patent Application, First Publication No. 2013-245341

SUMMARY OF INVENTION

Problems to be Solved by the Invention

However, the polyisocyanate mixtures disclosed in Patent Documents 1 and 2 have groups having hydrophilicity bonded via urethane groups within the polyisocyanate structure, and therefore the isocyanate functional group number is reduced, meaning the curability including the drying properties, and the physical properties of the resulting coating film such as the hardness and the water resistance tend to be unsatisfactory. Moreover, another problem arises in that when the mixture is combined with the active hydrogen group-containing main agent that reacts with the isocyanate groups, there tends to be a marked increase in viscosity.

In the case of the technology disclosed in Patent Documents 3 and 4, using a polyisocyanate that exhibits low viscosity as a curing agent enables the curing agent to be used in an aqueous coating composition. However, polyisocyanate compositions obtained using this technology have a low isocyanate functional group number per molecule, and therefore the curability including the drying properties, and the physical properties of the resulting coating film such as the hardness and the water resistance tend to be unsatisfactory.

The present invention has been developed in light of the above circumstances, and provides a polyisocyanate composition that exhibits favorable viscosity change, good pot life when used in a water-based coating composition, and excellent drying properties, gloss, hardness, water resistance and salt water spray resistance when used in a coating film. Further, the present invention also provides a water-based coating composition and a coated substrate that use the polyisocyanate composition.

Means for Solving the Problems

In other words, the present invention includes the following aspects.

(1) A polyisocyanate composition containing a polyisocyanate derived from at least one diisocyanate selected from the group consisting of aliphatic diisocyanates and alicyclic diisocyanates, wherein

among the bonded groups derived from isocyanate groups within the polyisocyanate, the mole fraction of isocyanurate groups is the highest,
the ratio (B)/(A) of the mass fraction (B) of polyisocyanate for which the number average molecular weight is at least 400 but not more than 700, relative to the mass fraction (A) of polyisocyanate for which the number average molecular weight is at least 200 but less than 400, is at least 1 but not more than 150, and
the mass fraction of polyisocyanate for which the number average molecular weight is 1,000 or greater, relative to the total mass of the polyisocyanate composition, is at least 5% by mass but not more than 20% by mass.

(2) The polyisocyanate composition according to (1), wherein the molar ratio (D)/(C) of isocyanurate groups (D) relative to iminooxadiazinedione groups (C) is at least 5 but not more than 100.
(3) The polyisocyanate composition according to (1) or (2), wherein among the bonded groups derived from isocyanate groups within the polyisocyanate composition, the mole fraction of iminooxadiazinedione groups (C), relative to the total molar amount of isocyanurate groups, iminooxadiazinedione groups, allophanate groups and uretdione groups, is at least 0.5 mol% but not more than 40.0 mol%.
(4) The polyisocyanate composition according to any one of (1) to (3), wherein among the bonded groups derived from isocyanate groups within the polyisocyanate composition, the mole fraction of uretdione groups, relative to the total molar amount of isocyanurate groups, iminooxadiazinedione groups, allophanate groups and uretdione groups, is at least 0.1 mol% but not more than 20.0 mol%.
(5) The polyisocyanate composition according to any one of (1) to (4), wherein the total mass fraction (A)+(B) of the mass fraction (A) of polyisocyanate for which the number average molecular weight is at least 200 but less than 400 and the mass fraction (B) of polyisocyanate for which the number average molecular weight is at least 400 but not more than 700, relative to the total mass of the polyisocyanate composition, is at least 50% by mass but not more than 80% by mass.
(6) The polyisocyanate composition according to any one of (1) to (5), further containing a solvent for which the n-octanol/water distribution coefficient (logKow) is at least -1.0 but not more than 3.0.
(7) The polyisocyanate composition according to any one of (1) to (6), wherein a portion of the isocyanate groups of the polyisocyanate have been modified with a hydrophilic compound.
(8) The polyisocyanate composition according to (7), wherein the hydrophilic compound is at least one compound selected from the group consisting of anionic compounds, cationic compounds and nonionic compounds.
(9) The polyisocyanate composition according to (8), wherein the anionic compound is at least one compound selected from the group consisting of compounds containing a carboxylic acid group, compounds containing a phosphoric acid group, and compounds containing a sulfonic acid group.
(10) The polyisocyanate composition according to (8), wherein the anionic compound includes a compound containing a sulfonic acid group, and
the compound containing a sulfonic acid group is at least one sulfonic acid selected from the group consisting of sulfonic acids having a hydroxyl group and sulfonic acids having an amino group.
(11) The polyisocyanate composition according to (8), wherein the nonionic compound is a polyalkylene glycol alkyl ether represented by general formula (I) shown below.

[Chemical formula 1]

$$HO \left( R^{11}O \right)_{n11} R^{12} \qquad (I)$$

(In general formula (I), $R^{11}$ represents an alkylene group of at least 1 but not more than 4 carbon atoms, $R^{12}$ represents an alkyl group of at least 1 but not more than 4 carbon atoms, and n11 represents a number of at least 4.0 but not more than 20.)

(12) The polyisocyanate composition according to any one of (7) to (11), wherein the modification rate by the hydrophilic compound is at least 0.15% by mass but not more than 50% by mass of the polyisocyanate composition.
(13) A water-based coating composition comprising the polyisocyanate composition according to any one of (1) to (12), and a resin that is dispersed or emulsified in water.
(14) A coated substrate that has been coated with the water-based coating composition according to (13).

Effects of the Invention

By using a polyisocyanate composition of an aspect described above, a polyisocyanate composition can be provided that exhibits favorable viscosity change, good pot life when used in a water-based coating composition, and excellent drying properties, gloss, hardness, water resistance and salt water spray resistance when used in a coating film. A water-based coating composition of an aspect described above includes the polyisocyanate composition described above, and has good pot life, and excellent drying properties, gloss, hardness, water resistance and salt water spray resistance when used for forming a coating film. A coated substrate of an aspect described above includes a coating film formed by applying a coating of the water-based coating composition described above, wherein the coating film exhibits excellent drying properties, gloss, hardness, water resistance and salt water spray resistance.

EMBODIMENTS FOR CARRYING OUT THE INVENTION

Embodiments for implementing the present invention (hereafter referred to as "embodiments of the present invention") are described below in detail. However, the present invention is not limited by the embodiments described below. The present invention may also be implemented with appropriate modifications that fall within the scope of the invention.

«Polyisocyanate Composition»

The polyisocyanate composition of an embodiment of the present invention contains a polyisocyanate derived from at least one diisocyanate selected from the group consisting of aliphatic diisocyanates and alicyclic diisocyanates.
Among the bonded groups derived from isocyanate groups within the polyisocyanate, the mole fraction of isocyanurate groups is the highest.
The ratio (B)/(A) of the mass fraction (B) of polyisocyanate for which the number average molecular weight is at least 400 but not more than 700, relative to the mass fraction (A) of polyisocyanate for which the number average molecular weight is at least 200 but less than 400, is at least 1 but not more than 150, and is preferably at least 5 but not more than 120, and more preferably at least 10 but not more than 100.
By ensuring that the ratio (B)/(A) falls within the above numerical range, the viscosity change upon blending with water or a water-based solvent is small, and the gloss of the resulting coating film is favorable.
The mass fraction of polyisocyanate for which the number average molecular weight is 1,000 or greater, relative to the total mass of the polyisocyanate composition, is at least 5% by mass but not more than 20% by mass, and is preferably at least 6% by mass but not more than 18% by mass, and more preferably at least 7% by mass but not more than 15% by mass.
By ensuring that the mass fraction of polyisocyanate for which the number average molecular weight is 1,000 falls within the above numerical range, the pot life upon mixing with a water-based main agent to form a water-based coating composition is favorable, and the gloss of the resulting coating film is also favorable.
The number average molecular weight of the polyisocyanates contained in the polyisocyanate composition of an embodiment of the present invention can be measured, for example, using gel permeation chromatography (GPC). Further, the mass fraction of polyisocyanate within each of the number average molecular weight ranges can be determined from the following formula, using the GPC measurement results.

$$\text{Mass fraction (\% by mass)} = \text{(peak surface area within specified number average molecular weight range)} / \text{(number average molecular weight total peak surface area)} \times 100$$

As a result of having the composition described above, the polyisocyanate composition of an embodiment of the present invention exhibits little viscosity change upon blending with water or water-based solvents, can form a water-based coating composition having good pot life, and can produce a coating film having excellent drying properties, gloss,

hardness, water resistance and salt water spray resistance.

Next, each of the constituent components of the polyisocyanate composition of an embodiment of the present invention is described below in detail.

<Polyisocyanate>

The polyisocyanate included in the polyisocyanate composition of an embodiment of the present invention is derived from at least one diisocyanate selected from the group consisting of aliphatic diisocyanates and alicyclic diisocyanates. Here, the term "polyisocyanate" means a compound obtained by reacting diisocyanate molecules, and if necessary, other compounds besides the diisocyanate (such as alcohols, water, and amines).

Examples of the aliphatic diisocyanates include, but are not limited to, 1,4-diisocyanatobutane, 1,5-diisocyanatopentane, ethyl (2,6-diisocyanato)hexanoate, 1,6-diisocyanatohexane (hereafter also abbreviated as HDI), 1,9-diisocyanatononane, 1,12-diisocyanatododecane, and 2,2,4- or 2,4,4-trimethyl-1,6-diisocyanatohexane.

Examples of the alicyclic diisocyanates include, but are not limited to, 1,3- or 1,4-bis(isocyanatomethyl)cyclohexane (hereafter also abbreviated as "hydrogenated XDI"), 1,3- or 1,4-diisocyanatocyclohexane, 3,5,5-trimethyl-1-isocyanato-3-(isocyanatomethyl)cyclohexane (hereafter also abbreviated as IPDI), 4,4'-diisocyanato-dicyclohexylmethane (hereafter also abbreviated as "hydrogenated MDI"), and 2,5- or 2,6-diisocyanatomethylnorbornane.

Further, in addition to the polyisocyanate derived from the one or more diisocyanates described above, the polyisocyanate composition of an embodiment of the present invention may also include an aliphatic triisocyanate such as 1,3,6-triisocyanatohexane, 1,8-diisocyanato-4-isocyanatomethyloctane or 2-isocyanatoethyl-2,6-diisocyanato-hexanoate, or a polyisocyanate derived from one of these aliphatic triisocyanates.

Among the above possibilities, HDI, IPDI, hydrogenated XDI, and hydrogenated MDI are preferred, as they tend to be more resistant to yellowing.

[Bonded Groups Derived From Isocyanate Groups]

The polyisocyanate has bonded groups derived from the isocyanate groups of the above diisocyanates. Examples of these bonded groups derived from isocyanate groups include the functional groups described below in (a) to (i):

(a) an isocyanurate group obtained by cyclization/trimerization of three isocyanate groups,
(b) an iminooxadiazinedione group obtained by cyclization/trimerization of three isocyanate groups,
(c) an allophanate group obtained by reacting two isocyanate groups and one hydroxyl group,
(d) an uretdione group obtained by cyclization/dimerization of two isocyanate groups,
(e) a biuret group obtained by reacting three isocyanate groups and one water molecule,
(f) a urethane group obtained by reacting one isocyanate group and one hydroxyl group,
(g) a urea group obtained by reacting one isocyanate group and one primary or secondary amine,
(h) an acylurea group obtained by reacting one isocyanate group and one carboxyl group, and
(i) an oxadiazinetrione group obtained by reacting two isocyanate groups and one molecule of carbon dioxide.

(Isocyanurate Group)

An isocyanurate group is a functional group obtained by cyclization/trimerization of three isocyanate groups, and refers to a structure represented by formula (II) shown below.

[Chemical formula 2]

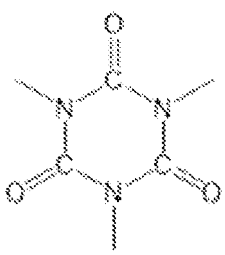

(II)

In the polyisocyanate composition of an embodiment of the present invention, among the bonded groups derived from isocyanate groups within the polyisocyanate, the mole fraction of isocyanurate groups is the highest. As a result,

the hardness and salt water spray resistance of the obtained coating film are more favorable.

Specifically, for example, relative to the total number of moles (100 mol%) of isocyanurate groups, iminooxadiazinedione groups, allophanate groups and uretdione groups, the mole fraction of isocyanurate groups is preferably greater than 25 mol% but not more than 95 mol%, more preferably at least 40 mol% but not more than 92 mol%, and even more preferably at least 50 mol% but not more than 90 mol%.

By ensuring that the mole fraction of isocyanurate groups is at least as high as the above lower limit, the drying properties and water resistance of the resulting coating film are excellent. On the other hand, by ensuring that the mole fraction is not more than the above upper limit, the water dispersibility of the polyisocyanate composition and the dispersibility with aqueous resins can be improved, and the pot life of the obtained water-based coating composition is more favorable.

The mole fraction of isocyanurate groups can be determined, for example, using $^{13}$C-NMR.

(Iminooxadiazinedione Group)

An iminooxadiazinedione group is a functional group obtained by cyclization/trimerization of three isocyanate groups, and refers to a structure represented by formula (III) shown below.

[Chemical formula 3]

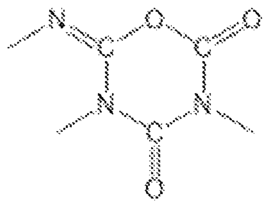

(III)

In the polyisocyanate composition of an embodiment of the present invention, the mole fraction of iminooxadiazinedione groups, relative to the total number of moles (100 mol%) of isocyanurate groups, iminooxadiazinedione groups, allophanate groups and uretdione groups, is preferably at least 0.5 mol% but not more than 40.0 mol%, more preferably at least 0.7 mol% but not more than 30.0 mol%, and even more preferably at least 1.0 mol% but not more than 20.0 mol%.

By ensuring that the mole fraction of iminooxadiazinedione groups is at least as high as the above lower limit, the compatibility with the main agent when used in a water-based coating composition and the drying properties when used in a coating film are more superior. On the other hand, by ensuring that the mole fraction is not more than the above upper limit, the drying properties and salt water spray resistance of the resulting coating film are more superior.

The mole fraction of iminooxadiazinedione groups can be determined, for example, using $^{13}$C-NMR.

The molar ratio (D)/(C) of isocyanurate groups (D) relative to iminooxadiazinedione groups (C) is preferably at least 5 but not more than 100, and more preferably at least 10 but not more than 90.

By ensuring that the molar ratio (D)/(C) falls within the above numerical range, the drying properties and water resistance of the resulting coating film are more superior.

The molar ratio (D)/(C) can be calculated, for example, by dividing the mole fraction (D) of isocyanurate groups by the mole fraction (C) of iminooxadiazinedione groups, with both these mole fractions being determined by $^{13}$C-NMR.

(Allophanate Group)

An allophanate group is a functional group formed by reacting the hydroxyl group of an alcohol and an isocyanate group, and refers to a structure represented by formula (IV) shown below.

[Chemical formula 4]

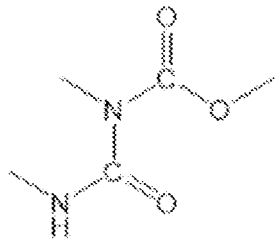

(IV)

In the polyisocyanate composition of an embodiment of the present invention, the mole fraction of allophanate groups, relative to the total number of moles (100 mol%) of isocyanurate groups, iminooxadiazinedione groups, allophanate groups and uretdione groups, is preferably at least 0.5 mol% but not more than 10.0 mol%.
By ensuring that the mole fraction of allophanate groups falls within the above numerical range, the compatibility with the main agent when used in a water-based coating composition and the drying properties when used in a coating film are more superior.
The mole fraction of allophanate groups can be determined, for example, using $^{13}C$-NMR.

(Uretdione Group)

An uretdione group is a functional group obtained by cyclization/dimerization of two isocyanate groups, and refers to a structure represented by formula (V) shown below. Polyisocyanates having uretdione groups have low viscosity and favorable dispersibility.

[Chemical formula 5]

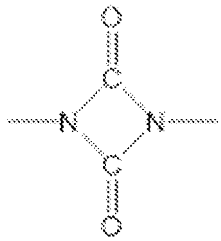

(V)

In the polyisocyanate composition of an embodiment of the present invention, the mole fraction of uretdione groups, relative to the total number of moles (100 mol%) of isocyanurate groups, iminooxadiazinedione groups, allophanate groups and uretdione groups, preferably has a lower limit of at least 0.1 mol%. Further, the upper limit for the mole fraction is preferably not more than 20 mol%, more preferably not more than 10 mol%, and even more preferably 2.5 mol% or less. By ensuring that the mole fraction of uretdione groups is not more than the above upper limit, the drying properties and water resistance of the resulting coating film are superior, whereas by ensuring that the mole fraction is at least as high as the above lower limit, a coating film of superior gloss can be obtained.
The mole fraction of uretdione groups can be determined, for example, using $^{13}C$-NMR or $^{1}H$-NMR.

(Other Bonded Groups)

Besides the bonded groups described above, the polyisocyanate included in the polyisocyanate composition of an embodiment of the present invention may also have at least one other bonded group selected from the group consisting of a biuret group, urethane group, urea group, acylurea group and oxadiazinetrione group.
In the polyisocyanate composition of an embodiment of the present invention, the total mole fraction of these other bonded groups, relative to the total number of moles (100 mol%) of isocyanurate groups, iminooxadiazinedione groups, allophanate groups and uretdione groups, is preferably at least 0.01 mol% but not more than 10 mol%.
The mole fraction of these other bonded groups can be determined, for example, using $^{13}C$-NMR or $^{1}H$-NMR.

(Hydrophilic Compound)

A portion of the isocyanate groups of the polyisocyanate included in the polyisocyanate composition of an embodiment of the present invention may be modified with a hydrophilic compound. In other words, a hydrophilic group derived from a hydrophilic compound may be introduced on at least a portion of the isocyanate groups of the polyisocyanate included in the polyisocyanate composition of an embodiment of the present invention. This type of polyisocyanate into which hydrophilic groups derived from a hydrophilic compound have been introduced may be referred to as a hydrophilic polyisocyanate.

The hydrophilic compound is a compound having a hydrophilic group. The hydrophilic compound preferably has, per molecule of the hydrophilic compound, at least one active hydrogen group for reacting with one isocyanate group of the polyisocyanate. Specific examples of the active hydrogen group include a hydroxyl group, mercapto group, carboxylic acid group, amino group, and thiol group.

There are no particular limitations on these types of hydrophilic compounds, and examples include anionic compounds, nonionic compounds and cationic compounds. One of these hydrophilic compounds may be used alone, or a combination of two or more compounds may be used.

(1) Anionic Compounds

There are no particular limitations on the anionic compounds, and examples include compounds containing a carboxylic acid group, compounds containing a phosphoric acid group, and compounds containing a sulfonic acid group.

There are no particular limitations on the compounds containing a carboxylic acid group, and examples include carboxylic acids containing a hydroxyl group, including monohydroxycarboxylic acids such as 1-hydroxyacetic acid, 3-hydroxypropanoic acid, 12-hydroxy-9-octadecanoic acid, hydroxypivalic acid and lactic acid; and polyhydroxycarboxylic acids such as dimethylolacetic acid, 2,2-dimethylolbutyric acid, 2,2-dimethylolpentanoic acid, dihydroxysuccinic acid and dimethylolpropionic acid. Among these, hydroxypivalic acid or dimethylolpropionic acid is preferred.

There are no particular limitations on the compounds containing a phosphoric acid group, and examples include acidic phosphate esters, acidic phosphite esters, acidic hypophosphite esters, and specific polyether phosphonates (such as products marketed under the brand name RHODAFAC (a registered trademark) (manufactured by Solvay Nicca Ltd.)). Among these, acidic phosphate esters are preferred.

From the viewpoint of the water dispersibility, the phosphorus atom content of the polyisocyanate composition, relative to the total mass (100% by mass) of the polyisocyanate composition, is preferably at least 0.03% by mass, more preferably at least 0.05% by mass, and even more preferably 0.1% by mass or greater. By ensuring that the phosphorus atom content is at least as large as the above lower limit, better water dispersibility tends to be achieved as a result of a reduction in surface tension.

Further, from the viewpoint of the physical properties of the coating film, the phosphorus atom content of the polyisocyanate composition, relative to the total mass (100% by mass) of the polyisocyanate composition, is preferably not more than 6.0% by mass, more preferably not more than 3.0% by mass, and even more preferably 1.0% by mass or less. By ensuring that the phosphorus atom content is not more than the above upper limit, the physical properties of the coating film tend to improve due to the increased number of isocyanate groups used in crosslinking.

Examples of the method used for controlling the phosphorus atom content within the above range include, but are not limited to, methods in which the blend ratio between the above compound containing a phosphoric acid group and the raw material polyisocyanate compound is adjusted as appropriate. Further, the phosphorus atom content can be measured by inductively coupled plasma emission spectroscopy (ICP-AES).

There are no particular limitations on the compounds containing a sulfonic acid group, and examples include sulfonic acids containing a hydroxyl group and sulfonic acids containing an amino group.

Examples of sulfonic acids containing a hydroxyl group include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and specific polyether sulfonates (such as products marketed under the brand name Tegomer (a registered trademark) (manufactured by The Goldschmidt AG, Essen, Germany)).

Examples of sulfonic acids containing an amino group include 2-aminoethanesulfonic acid, 2-methylaminoethanesulfonic acid, 2-(cyclohexylamino)-ethanesulfonic acid, 3-(cyclohexylamino)-propanesulfonic acid, 4-aminotoluene-2-sulfonic acid, 5-aminotoluene-2-sulfonic acid, 2-aminonaphthalene-4-sulfonic acid, 4-aminobenzenesulfonic acid, and 3-aminobenzenesulfonic acid.

The sulfonic acid having a hydroxyl group is preferably a compound represented by general formula (VI) shown below.

[Chemical formula 6]

$$HO\text{-}R^{31}\text{-}SO_3H \qquad (VI)$$

In general formula (VI), $R^{31}$ represents a hydrocarbon group of at least 1 but not more than 10 carbon atoms that may contain at least one moiety selected from the group consisting of an ether linkage, an ester linkage, a carbonyl group and an imino group. $R^{31}$ may contain a cyclic structure. The cyclic structure is an aromatic ring, a 5-membered or 6-membered containing two nitrogen atoms, or a 5-membered or 6-membered containing a nitrogen atom and an oxygen atom.

Among these, 2-hydroxyethanesulfonic acid, 3-hydroxypropanesulfonic acid, hydroxybenzenesulfonic acid, hydroxy(methyl)benzenesulfonic acid, 2-(cyclohexylamino)-ethanesulfonic acid or 3-(cyclohexylamino)-propanesulfonic acid is preferred.

The acidic group such as the carboxylic acid group, phosphoric acid group or sulfonic acid group of the anionic compound is preferably neutralized with a cationic compound such as an inorganic base or an organic amine compound.

Examples of the inorganic base include alkali metals such as lithium, sodium, potassium, rubidium and cesium; alkaline earth metals such as magnesium, calcium, strontium and barium; and other metals such as manganese, iron, cobalt, nickel, copper, zinc, silver, cadmium, lead and aluminum; and ammonia.

Examples of the organic amine compounds include linear tertiary amines such as trimethylamine, triethylamine, tripropylamine, tributylamine, trioctylamine, trilaurylamine, tritridecylamine and tristearylamine; branched tertiary amines such as triisopropylamine, triisobutylamine, tri-2-ethylhexylamine and tri-branched-tridecylamine; tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl-(branched)-tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylcyclohexylamine, N,N-dicyclohexylmethylamine, N,N-dicyclohexylethylamine, and tricyclohexylamine; tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; and cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine. One of these organic amine compounds may be used alone, or a combination of two or more organic amine compounds may be used.

Among these compounds, tertiary amines of at least 5 but not more than 30 carbon atoms are preferred, and specific examples include triethylamine, tripropylamine, tributylamine, trioctylamine, trilaurylamine, tridecylamine, triisopropylamine, triisobutylamine, tri-2-ethylhexylamine, tri-branched-tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl-(branched)-tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine and quinoline. One of these preferred organic amine compounds may be used alone, or a combination of two or more such compounds may be used.

In order to disperse the polyisocyanate compound in water, the compound is modified with a hydrophilic compound (thereby introducing hydrophilic groups derived from the hydrophilic compound into the polyisocyanate compound), but by ensuring that the proportion of modified groups does not become too high, any deterioration in the physical properties of the coating film (such as the hardness, water resistance and solvent resistance) tends to be able to be suppressed. In other words, because the anionic compound has a high degree of emulsifying power, a superior emulsification effect can be obtained with a small amount of the compound.

From the viewpoint of the water dispersibility, the lower limit for the sulfur atom content in the polyisocyanate composition, relative to the total mass (100% by mass) of the polyisocyanate composition, is preferably 0.03% by mass, more preferably 0.05% by mass, and even more preferably 0.08% by mass. By ensuring that the sulfur atom content is at least as large as the above lower limit, better water dispersibility tends to be achieved as a result of a reduction in surface tension.

Further, from the viewpoint of the physical properties of the coating film, the upper limit for the sulfur atom content of the polyisocyanate composition, relative to the total mass (100% by mass) of the polyisocyanate composition, is preferably 3.0% by mass, more preferably 1.5% by mass, and even more preferably 0.6% by mass. By ensuring that the sulfur atom content is not more than the above upper limit, the physical properties of the coating film tend to improve due to the increased number of isocyanate groups used in crosslinking.

In other words, in the polyisocyanate composition, the sulfur atom content relative to the total mass (100% by mass) of the polyisocyanate composition is preferably at least 0.03% by mass but not more than 3.0% by mass, more preferably at least 0.05% by mass but not more than 1.5% by mass, and even more preferably at least 0.08% by mass but not more than 0.6% by mass.

Examples of the method used for controlling the sulfur atom content within the above range include, but are not limited to, methods in which the blend ratio between the above compound containing a sulfonic acid group and the raw material polyisocyanate compound is adjusted as appropriate. Further, the sulfur atom content can be measured by ion chromatography (IC).

Examples of the method used for reacting the raw material polyisocyanate compound and the above anionic compound include, but are not limited to, methods in which the terminal isocyanate groups of the polyisocyanate that represents the raw material polyisocyanate compound are reacted with the active hydrogen group of the anionic compound.

(2) Nonionic Compounds

There are no particular limitations on the nonionic compounds, and examples include polyalkylene glycol alkyl ethers. From the viewpoint of lowering the viscosity of the polyisocyanate composition, the number of hydroxyl groups in the polyalkylene glycol alkyl ether is preferably one. Preferred polyalkylene glycol alkyl ethers have a structure represented by general formula (1) shown below.

[Chemical formula 7]

$$HO-\left(R^{11}O\right)_{n11}-R^{12} \qquad (I)$$

(In general formula (I), $R^{11}$ represents an alkylene group of at least 1 but not more than 4 carbon atoms, $R^{12}$ represents an alkyl group of at least 1 but not more than 4 carbon atoms, and n11 represents a number of at least 4.0 but not more than 20.)

A polyalkylene glycol alkyl ether is not composed of a single component, but is rather an aggregate of substances having different values for the polymerization degree represented by n11 (hereafter sometimes referred to as the "polymerization degree n11" or simply "n11"). Accordingly, the polymerization degree n11 represents an average value.

When blending the polyisocyanate with the water-based main agent, an increase in viscosity upon mixing with the main agent is often problematic. When the viscosity increase is large, dispersing the polyisocyanate uniformly in the main agent becomes difficult, which tends to lead to a deterioration in the physical properties of the coating film.

Accordingly, from the viewpoints of the water dispersibility and the dispersibility within the main agent, n11 is typically at least 4.0 but not more than 20.0, and is preferably at least 4.0 but not more than 16.0, and more preferably at least 4.0 but not more than 12.0. By ensuring that n11 is at least as large as the above lower limit, the emulsifying power can be increased, meaning the dispersibility tends to improve, whereas by ensuring that n11 is not more than the above upper limit, viscosity increases can be prevented, meaning dispersion tends to be more easily achieved.

A combination of two or more polyalkylene glycol alkyl ethers having different n11 values may also be used. The n11 value of the polyalkylene glycol alkyl ether can be measured by proton nuclear magnetic resonance (NMR) spectroscopy.

In general formula (I), from the viewpoint of imparting hydrophilicity, $R^{11}$ is typically an alkylene group of at least 1 but not more than 4 carbon atoms, and from the viewpoint of enabling superior hydrophilicity to be imparted, is preferably an ethylene group of 2 carbon atoms.

Further, from the viewpoint of imparting hydrophilicity, $R^{12}$ is typically an alkyl group of at least 1 but not more than 4 carbon atoms, and from the viewpoint of enabling superior hydrophilicity to be imparted, is preferably a methyl group of 1 carbon atom.

Specific examples of the polyalkylene glycol alkyl ether include, but are not limited to, polyethylene glycol

(mono)methyl ether, poly(ethylene, propylene) glycol mono(methyl) ether, and polyethylene glycol (mono)ethyl ether. Among these, from the viewpoint of imparting hydrophilicity, polyethylene glycol (mono)methyl ether is preferred.

In the polyisocyanate composition, from the viewpoint of the physical properties of the coating film, the amount of those portions derived from the polyalkylene glycol alkyl ether, relative to the total mass (100% by mass) of the polyisocyanate composition, is preferably at least 2.0% by mass but not more than 30% by mass, more preferably at least 4.0% by mass but not more than 20% by mass, even more preferably at least 6.0% by mass but not more than 18% by mass, and particularly preferably at least 6.0% by mass but not more than 16% by mass. By ensuring that the amount of these portions derived from the polyalkylene glycol alkyl ether falls within the above range, the number of isocyanate groups used in crosslinking tends to increase, and the physical properties (such as the hardness, water resistance and solvent resistance) of the coating film tend to improve.

Examples of the method used for controlling the amount of the portions derived from the polyalkylene glycol alkyl ether so as to fall within the above range include, but are not limited to, methods in which the blend ratio between the polyalkylene glycol alkyl ether and the polyisocyanate compound is adjusted as appropriate. Further, the amount of the portions derived from the polyalkylene glycol alkyl ether can be measured by liquid chromatography-mass spectrometry (LC-MS).

In the polyisocyanate composition, the proportion modified by the polyalkylene glycol alkyl ether (modification ratio) (hereafter sometimes referred to as the "polyalkylene glycol alkyl ether introduction ratio") indicates the proportion of introduced portions derived from the polyalkylene glycol alkyl ether per 100 molar equivalents of isocyanate groups in the raw material polyisocyanate composition. From the viewpoint of ensuring that the amount of the portions derived from the polyalkylene glycol alkyl ether fall within the preferred range specified above, the modification ratio is preferably at least 0.5 mol% but not more than 40 mol%, more preferably at least 1.0 mol% but not more than 30 mol%, and even more preferably at least 2.0 mol% but not more than 20 mol%.

The above amount and modification ratio can be calculated, for example, using the method described below.

Specifically, using the polyisocyanate composition as a sample, these values can be determined by liquid chromatography (LC), using the peak surface area ratio at 220 nm between the polyisocyanate with no introduced groups, the polyisocyanate in which one portion derived from the polyalkylene glycol alkyl ether has been introduced, the polyisocyanate in which two portions derived from the polyalkylene glycol alkyl ether has been introduced, and the polyisocyanate in which three or more portions derived from the polyalkylene glycol alkyl ether has been introduced. Examples of the LC measurement conditions include those listed below.

(Measurement Conditions)

LC apparatus: UPLC (brand name) manufactured by Waters Corporation
Column: ACQUITY UPLC HSS T3 1.8 μm C18, internal diameter 2.1 mm × length 50 mm, manufactured by Waters Corporation)
Flow rate: 0.3 mL/min
Mobile phases: A = 10 mM aqueous solution of ammonium acetate, B = acetonitrile
Gradient conditions: initial mobile phase composition of A/B = 98/2, and then following injection of the sample, the proportion of B is increased linearly, such that at 10 minutes, A/B = 0/100
Detection method: photodiode array detector, measurement wavelength: 220 nm

(3) Cationic Compounds

There are no particular limitations on the cationic compounds, and examples include amine compounds containing a hydroxyl group such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. Among these, dimethylethanolamine, diethylethanolamine, N,N-dimethylaminohexanol, N,N-dimethylaminoethoxyethanol, or N,N-dimethylaminoethoxyethoxyethanol is preferred. The tertiary amino group (cationic hydrophilic group) derived from the cationic compound that has been introduced into the polyisocyanate may be quaternized using dimethyl sulfate or diethyl sulfate or the like.

The tertiary amino group of the cationic compound is preferably neutralized with a compound having an anionic group. There are no particular limitations on this anionic group, and examples include a carboxyl group, sulfonic acid group, phosphoric acid group, halogen atom, or sulfuric acid group. There are no particular limitations on the compounds having a carboxyl group, and examples include formic acid, acetic acid, propionic acid, butyric acid and lactic acid. There are no particular limitations on the compounds having a sulfonic acid group, and examples include ethanesulfonic acid

and the like. There are no particular limitations on the compounds having a phosphoric acid group, and examples include phosphoric acid and acidic phosphate esters. There are no particular limitations on the compounds having a halogen group, and examples include hydrochloric acid and the like. There are no particular limitations on the compounds having a sulfuric acid group, and examples include sulfuric acid and the like. Among these, compounds having a carboxyl group are preferred, and acetic acid, propionic acid or butyric acid is particularly preferred.

<Solvent>

The polyisocyanate composition of an embodiment of the present invention may also include a solvent.
The use of a solvent for which the n-octanol/water distribution coefficient (logKow) is at least -1.0 but not more than 3.0 improves the pot life when the composition is used as a coating composition and also enhances the gloss when the composition is used for a coating film, and is consequently preferred. The n-octanol/water distribution coefficient (logKow) is the ratio, upon dissolution of a substance in a mixture of n-octanol and water, of the substance concentration in n-octanol relative to the substance concentration in water. A large value for logKow indicates more ready dissolution in oils and fats, and lower solubility in water.
Examples of these types of solvents include alcohols, ethers, ether alcohols, esters of ether alcohols, ketones, and esters.
Examples of the alcohols include methanol, ethanol, propanol, isopropanol, and 2-ethylhexanol.
Examples of the ethers include diethylene glycol dimethyl ether, diethylene glycol diethyl ether, diethylene glycol dibutyl ether, and dipropylene glycol dimethyl ether.
Examples of the ether alcohols include ethylene glycol monomethyl ether, ethylene glycol monoethyl ether, ethylene glycol monobutyl ether, diethylene glycol monoethyl ether, diethylene glycol monobutyl ether, propylene glycol monomethyl ether, propylene glycol monoethyl ether, and dipropylene glycol monomethyl ether (DPM).
Examples of the esters of ether alcohols include ethylene glycol monomethyl ether acetate, ethylene glycol monoethyl ether acetate, ethylene glycol monobutyl ether acetate (butyl glycol acetate, BGA), diethylene glycol monoethyl ether acetate, diethylene glycol monobutyl ether acetate, propylene glycol monoethyl ether acetate, propylene glycol monomethyl ether acetate (PMA), dipropylene glycol monomethyl ether acetate, and propylene glycol diacetate (PGDA).
Examples of the ketones include acetone, methyl ethyl ketone, and methyl isobutyl ketone.
Examples of the esters include ethyl acetate, butyl acetate, and cellosolve acetate.
One of these solvents may be used alone, or a combination of two or more solvents may be used.
The n-octanol/water distribution coefficient (logKow) for the solvent can be measured, for example, using the flask shaking method describe in JIS Z7260-107.
The amount of the solvent, relative to the total mass of the polyisocyanate composition, is preferably at least 0% by mass but not more than 90% by mass, more preferably at least 0% by mass but not more than 50% by mass, and even more preferably at least 0% by mass but not more than 30% by mass.

<Method for Producing Polyisocyanate Composition>

A method for producing the polyisocyanate composition of an embodiment of the present invention is described below.
The polyisocyanate of an embodiment of the present invention can be obtained by first simultaneously conducting an isocyanuration reaction that forms an isocyanurate group, an iminooxadiazinedionation reaction that forms an iminooxadiazinedione group, an allophanation reaction that forms an allophanate group, and an uretdionization reaction that forms an uretdione group and the like, in the presence of excess diisocyanate, and following completion of these reactions, removing the unreacted diisocyanate. During these reactions, as the desired bonded groups are produced under various conditions, other bonded groups may sometimes also be produced at the same time.
Moreover, conducting a heat treatment prior to removal of the unreacted diisocyanate is preferred in terms of imparting superior drying properties and water resistance. The lower limit for the temperature of this heat treatment is preferably 80°C, more preferably 90°C, and even more preferably 100°C. Further, the upper limit for the temperature is preferably not more than 180°C, more preferably not more than 160°C, and even more preferably 150°C or lower. The lower limit for the heat treatment time is preferably 0.2 hours, and more preferably 0.5 hours. Further, the upper limit is preferably 5 hours, and more preferably 2 hours.
Furthermore, the reactions described above may be performed separately, and the polyisocyanates obtained in the respective reactions then mixed together so that the mole fraction of each of the bonded groups falls within the respective range described above. From the viewpoint of the simplicity of the production, it is preferable that the above reactions are conducted simultaneously to obtain the polyisocyanate, whereas from the viewpoint of enabling the mole fraction of each bonded group to be adjusted freely, it is preferable that the reactions are performed separately and the products are then mixed.

[Method for Producing Polyisocyanate containing Isocyanurate Group]

There are no particular limitations on the catalyst used for producing a polyisocyanate containing an isocyanurate group from a diisocyanate, but a catalyst having basic properties is preferred, and specific examples include hydroxides and weak organic acid salts of tetraalkylammonium ions, hydroxides and weak organic acid salts of hydroxyalkylammonium ions, metal salts of alkylcarboxylic acids, metal alcoholates, aminosilyl group-containing compounds, Mannich bases, mixtures of a tertiary amine and an epoxy compound, and phosphorus-based compounds.
Examples of the tetraalkylammonium ions include tetramethylammonium and tetraethylammonium ions.
Examples of the weak organic acids include acetic acid and caprylic acid.
Examples of the hydroxyalkylammonium ions include trimethylhydroxypropylammonium, trimethylhydroxyethylammonium, triethylhydroxypropylammonium, and triethylhydroxyethylammonium ions.
Examples of the alkylcarboxylic acids include acetic acid, caproic acid, octylic acid, and myristic acid.
Examples of the metal salts include tin, zinc and lead salts.
Examples of the metal alcoholates such as sodium alcoholates and potassium alcoholates.
Examples of the aminosilyl group-containing compounds include hexamethyldisilazane and the like.
Examples of the phosphorus-based compounds include tributylphosphine.
The amount used of these types of catalyst is preferably at least 10 ppm by mass but not more than 1.0% by mass relative to the total mass of the raw material diisocyanate (and, where necessary, the alcohol). Further, in order to halt the isocyanuration reaction, the catalyst may be inactivated by adding an acidic substance that neutralizes the catalyst, or by thermal degradation or chemical degradation. Examples of acidic substances that neutralize the catalyst include phosphoric acid and acidic phosphate esters.
The yield of the polyisocyanate generally tends to be at least 10% by mass but not more than 70% by mass. Polyisocyanates obtained at a higher yield tend to have a higher viscosity. The yield can be calculated from the ratio of the mass of the obtained polyisocyanate relative to the total mass of the raw material components.
Although there are no particular limitations on the reaction temperature of the isocyanuration reaction, the temperature is preferably at least 50°C but not more than 200°C, and more preferably at least 50°C but not more than 150°C. By ensuring that the reaction temperature is at least as high as the above lower limit, the reaction tends to proceed more readily, whereas by ensuring that the reaction temperature is not higher than the above upper limit, side reactions that can cause coloration tend to be better suppressed.
Following completion of the isocyanuration reaction, the unreacted diisocyanate is preferably removed by thin film evaporation or extraction or the like. Even in those cases where the polyisocyanate contains unreacted diisocyanate, the amount of diisocyanate relative to the total mass of the polyisocyanate is preferably not more than 3.0% by mass, more preferably not more than 1.0% by mass, and even more preferably 0.5% by mass or less. By ensuring that the residual unreacted diisocyanate concentration falls within the above range, the curability tends to be more superior.

[Method for Producing Polyisocyanate containing Iminooxadiazinedione Group]

There are no particular limitations on the catalyst used for producing a polyisocyanate containing an iminooxadiazinedione group from a diisocyanate, but, for example, catalysts (1) and (2) described below, which are generally well known as iminooxadiazinedionation reaction catalysts, may be used.

(1) (Poly)hydrogen fluorides represented by general formula $M[F_n]$ or general formula $M[F_n(HF)_m]$ (wherein in the formulas, m and n are integers that satisfy the relationship m/n>0, and M represents an n-valent cation (mixture) or one or more radicals that in total represent n-valence.)
(2) Compounds formed from a compound represented by general formula $R^1$-$CR'_2$-C(O)O- or general formula $R^2$=CR'-C(O)O-, and a quaternary ammonium cation or quaternary phosphonium cation.

(In the formulas, each of $R^1$ and $R^2$ independently represents a linear, branched or cyclic, saturated or unsaturated, perfluoroalkyl group of at least one but not more than 30 carbon atoms. Each of the plurality of R' groups independently represents a hydrogen atom or an alkyl group or aryl group of at least one but not more than 20 carbon atoms which may contain a hetero atom.)
Specific examples of the compounds (1) ((poly)hydrogen fluorides) include tetramethylammonium fluoride hydrate, and tetraethylammonium fluoride.
Specific examples of the compounds (2) include 3,3,3-trifluorocarboxylic acid, 4,4,4,3,3-pentafluorobutanoic acid, 5,5,5,4,4,3,3-heptafluoropentanoic acid, and 3,3-difluoropropa-2-enoic acid.
Among these, from the viewpoint of ease of availability, a compound (1) is preferred as the iminooxadiazinedionation reaction catalyst, whereas from the viewpoint of safety, a compound (2) is preferred.
The blend amount of the iminooxadiazinedionation reaction catalyst described above, relative to the mass of

the added diisocyanate, is preferably at least 10 ppm by mass but not more than 1,000 ppm by mass. The lower limit for the blend amount is more preferably 20 ppm by mass, even more preferably 40 ppm by mass, and particularly preferably 80 ppm by mass.

The upper limit is more preferably 800 ppm by mass, even more preferably 600 ppm by mass, and particularly preferably 500 ppm by mass.

Further, the iminooxadiazinedionation reaction temperature is preferably at least 40°C but not more than 120°C. The lower limit for the reaction temperature is more preferably 50°C, and even more preferably 55°C. The upper limit is more preferably 100°C, even more preferably 90°C, and particularly preferably 80°C.

By ensuring that the iminooxadiazinedionation reaction temperature is at least as high as the above lower limit, the reaction rate tends to be able to be maintained at a higher rate. Further, by ensuring that the iminooxadiazinedionation reaction temperature is not more than the above upper limit, coloration and the like of the polyisocyanate tends to be more effectively suppressed.

[Method for Producing Polyisocyanate Containing Allophanate Group]

There are no particular limitations on the catalyst used for producing a polyisocyanate containing an allophanate group from a diisocyanate, and examples include alkylcarboxylate salts of tin, lead, zinc, bismuth, zirconium and zirconyl; organotin compounds such as tin 2-ethylhexanoate and dibutyltin dilaurate; organolead compounds such as lead 2-ethylhexanoate; organozinc compounds such as zinc 2-ethylhexanoate; as well as bismuth 2-ethylhexanoate, zirconium 2-ethylhexanoate, and zirconyl 2-ethylhexanoate. One of these catalysts may be used alone, or a combination of two or more catalysts may be used.

Further, the isocyanuration reaction catalysts described above may also function as allophanation reaction catalysts. In those cases where the allophanation reaction is conducted using an isocyanuration reaction catalyst described above, an isocyanurate group-containing polyisocyanate is of course also produced. Conducting an allophanation reaction and an isocyanuration reaction using an isocyanuration reaction catalyst described above as the allophanation reaction catalyst is preferred in terms of achieving economic production.

The blend amount of the allophanation reaction catalyst described above, relative to the mass of the added diisocyanate, is preferably at least 10 ppm by mass but not more than 1,000 ppm by mass. The lower limit for the blend amount is more preferably 20 ppm by mass, even more preferably 40 ppm by mass, and particularly preferably 80 ppm by mass.

The upper limit is more preferably 800 ppm by mass, even more preferably 600 ppm by mass, and particularly preferably 500 ppm by mass.

Further, the allophanation reaction temperature is preferably at least 40°C but not more than 180°C. The lower limit for the reaction temperature is more preferably 60°C, even more preferably 80°C, and still more preferably 100°C. The upper limit is more preferably 160°C, and even more preferably 140°C.

By ensuring that the allophanation reaction temperature is at least as high as the above lower limit, the reaction rate tends to be able to be maintained at a higher rate. Further, by ensuring that the allophanation reaction temperature is not more than the above upper limit, coloration and the like of the polyisocyanate tends to be more effectively suppressed.

The alcohol used in the formation of the allophanate group is preferably an alcohol composed solely of carbon, hydrogen and oxygen.

Specific examples of the alcohol include, but are not limited to, monoalcohols, polyols, and mixtures thereof.

Specific examples of the monoalcohols include ethanol, 1-propanol, 2-propanol, 1-butanol, 2-methyl-1-propanol, 2-butanol, 1-pentanol, 3-methyl-1-butanol, 2-methyl-1-butanol, 2,2-dimethyl-1-propanol, 2-pentanol, 3-methyl-2-butanol, 3-pentanol, 2-methyl-2-butanol, 1-hexanol, 2-methyl-1-pentanol, 3-methyl-1-pentanol, 4-methyl-1-pentanol, 2,2-dimethyl-1-butanol, 2-ethyl-1-butanol, 2-hexanol, 3-hexanol, 3-methyl-2-pentanol, 4-methyl-2-pentanol, 2-methyl-3-pentanol, 3,3-dimethyl-2-butanol, 1-heptanol, 2-heptanol, 3-heptanol, 4-heptanol, 1-octanol, 6-methyl-1-heptanol, and 2-ethylhexanol. A single monoalcohol may be used alone, or a combination of two or more monoalcohols may be used.

Specific examples of the polyols include dialcohols such as ethylene glycol, 1,3-butanediol, neopentyl glycol, and 2-ethylhexanediol.

Among these compounds, the alcohol is preferably a monoalcohol, and is more preferably a monoalcohol having a molecular weight of not more than 200.

The number of carbon atoms in the monoalcohol is preferably at least 4 but not more than 10, and more preferably at least 4 but not more than 8. Further, from the viewpoint of achieving a more effective and reliable manifestation of the effects of an embodiment of the present invention, the monoalcohol is preferably a primary alcohol, and more preferably a monoalcohol having a branched structure.

[Method for Producing Polyisocyanate Containing Uretdione Group]

There are no particular limitations on the catalyst used for producing a polyisocyanate containing an uretdione group, and specific examples include tertiary phosphines, including trialkylphosphines such as tri-n-butylphosphine and tri-n-octylphosphine, tris(dialkylamino)phosphines such as tris(dimethylamino)-phosphine, and cycloalkylphosphines such as cyclohexyl-di-n-hexylphosphine. These compounds also function as an allophanation reaction catalyst. Furthermore, most of these compounds simultaneously promote the isocyanuration reaction, producing isocyanurate group-containing polyisocyanates such as isocyanurate trimers in addition to the uretdione group-containing polyisocyanates such as uretdione dimers.

Furthermore, polyisocyanates having an uretdione group can also be obtained by heating, even without the use of an uretdionization reaction catalyst. An uretdione group-containing polyisocyanate such as an uretdione dimer contained within the polyisocyanate composition of an embodiment of the present invention is preferably produced by heating from the viewpoint of storage stability.

Moreover, a separate polyisocyanate composed of a dimer or higher multimer of a diisocyanate may also be added to the above polyisocyanate in an arbitrary proportion. There are no particular limitations on the bonded groups that constitute the separate polyisocyanate, provided the final product polyisocyanate composition contains a biuret group.

[Method for Producing Hydrophilic Polyisocyanate]

In the polyisocyanate composition of an embodiment of the present invention, in those cases where a portion of the isocyanate groups of a polyisocyanate have been modified by a hydrophilic compound, namely, in those cases where the polyisocyanate composition includes a hydrophilic polyisocyanate, a step of mixing and reacting a hydrophilic compound and a polyisocyanate (hereafter sometimes referred to as a "reaction step") is preferably included.

The polyisocyanate used in the reaction step may be produced using one of the above methods for producing a polyisocyanate having a specific functional group.

From the viewpoints of the emulsifiability and the physical properties of the coating film, the amount of the hydrophilic compound in the polyisocyanate composition of an embodiment of the present invention is preferably within a range from at least 0.25% by mass to not more than 50% by mass. In terms of the pot life and the salt water spray resistance, the lower limit is more preferably at least 0.5% by mass, and even more preferably 1% by mass or greater.

In the reaction step, the reaction temperature and reaction time may be determined appropriately in accordance with the reaction progression, but the reaction temperature is preferably at least 0°C but not more than 150°C, and the reaction time is preferably at least 30 minutes but not longer than 48 hours.

Furthermore, in the reaction step, a known common catalyst may be used in some cases. There are no particular limitations on this catalyst, and examples include catalysts (a) to (e) listed below. Any of these catalysts may be used alone, or a mixture of catalysts may be used.

(a) Organotin compounds such as tin octanoate, tin 2-ethyl-1-hexanoate, tin ethyl caproate, tin laurate, tin palmitate, dibutyltin oxide, dibutyltin dichloride, dibutyltin diacetate, dibutyltin dimaleate, dibutyltin dilaurate, dioctyltin diacetate, and dioctyltin dilaurate
(b) Organozinc compounds such as zinc chloride, zinc octanoate, zinc 2-ethyl-1-hexanoate, zinc 2-ethylcaproate, zinc stearate, zinc naphthenate, and zinc acetylacetonate
(c) Organotitanium compounds
(d) Organozirconium compounds
(e) Tertiary amines such as triethylamine, tributylamine, N,N-diisopropylethylamine, and N,N-dimethylethanolamine
(f) Diamines such as triethylenediamine, tetramethylethylenediamine, and 1,4-diazabicyclo[2.2.2] octane

In the method for producing a polyisocyanate composition of an embodiment of the present invention, a solvent may or may not be used. Solvents that can be used in the method for producing the polyisocyanate composition of an embodiment of the present invention may be either hydrophilic solvents or hydrophobic solvents. Examples of these hydrophilic solvents and hydrophobic solvents include the same solvents as those listed above in relation to the aforementioned solvent.

<Characteristics of the Polyisocyanate Composition>

From the viewpoint of the water resistance of the coating film, the isocyanate group content of the polyisocyanate composition of an embodiment of the present invention, when the non-volatile fraction is deemed to represent 100% by mass, is preferably at least 10% by mass but not more than 25% by mass, and is more preferably at least 15% by mass but not more than 24% by mass.

The isocyanate group content can be measured, for example, in accordance with the method described in JIS K7301-1995.

From the viewpoint of the solvent resistance of the coating film, the number average molecular weight of the polyisocyanate composition of an embodiment of the present invention is preferably at least 450 but not more than 2,000, more preferably at least 500 but not more than 1,800, and even more preferably at least 550 but not more than 1,550. There are no particular limitations on the method used for controlling the number average molecular weight within the above range, and examples include methods in which the blend amount of the diisocyanate raw material, and conditions such as the reaction temperature and the reaction time are adjusted as appropriate.

The number average molecular weight can be measured, for example, using GPC.

From the viewpoints of the water resistance of the coating film, retaining isocyanate groups, and the pot life, the average number of isocyanate functional groups for the polyisocyanate composition of an embodiment of the present invention is preferably at least 1.8 but not more than 6.2, more preferably at least 2.0 but not more than 5.6, and even more preferably at least 2.5 but not more than 4.6. There are no particular limitations on the method used for controlling the average number of isocyanate functional groups within the above range, and examples include methods in which conditions such as the reaction temperature, the reaction time, and the amount of catalyst used with the diisocyanate raw material are adjusted as appropriate.

The average number of isocyanate functional groups can be calculated, for example, using the formula shown below.

$$\text{(Average Number of Isocyanate Functional Groups)} = \{\text{(number average molecular weight)} \times \text{(isocyanate group content)} \times 0.01\} / 42$$

«Water-Based Coating Composition»

A water-based coating composition of an embodiment of the present invention contains the polyisocyanate composition described above, and a resin that is dispersed or emulsified in water.

The polyisocyanate composition described above may also be mixed with a resin and an organic solvent, and used as an organic solvent-based coating composition, but is preferably mixed with a resin that is dispersed or emulsified in water, and used as a water-based coating composition.

As a result of including the polyisocyanate composition described above, the coating composition of an embodiment of the present invention has favorable pot life, and exhibits excellent drying properties, gloss, hardness, water resistance, and salt water spray resistance when formed as a coating film.

The water-based coating composition of an embodiment of the present invention can be used, in particular, in building coating materials, automobile coating materials, automotive repair coating materials, coating materials for plastics, pressure-sensitive adhesives, adhesives, building materials, household water-based coating materials, other coating materials, sealants, inks, cast molding materials, elastomers, foams, raw materials for plastics, and fiber treatment agents.

Next, each of the constituent components included in the coating composition of an embodiment of the present invention is described below in detail.

<Resin>

In the coating composition of an embodiment of the present invention, the resin used as the main component may be any resin that can be dispersed or emulsified in water, but is preferably an active hydrogen compound (a polyvalent active hydrogen compound).

An active hydrogen compound is a compound having two or more active hydrogens bonded within the molecule. Examples of active hydrogen compounds include polyols, polyamines and polythiols, but polyols are the most widely used.

There are no particular limitations on specific examples of these types of active hydrogen compounds, and examples include acrylic resins, polyester resins, polyether resins, epoxy resins, fluororesins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.

Among these, acrylic resins and polyester resins are preferred as the active hydrogen compound.

[Acrylic Resins]

There are no particular limitations on the acrylic resins, and examples include acrylic resins obtained by polymerizing one monomer, or a mixture of monomers, selected from among polymerizable monomers (a) to (e) listed

below. One of these acrylic resins may be used alone, or a mixture of resins may be used.

(a) (meth)acrylate esters such as methyl (meth)acrylate, ethyl (meth)acrylate, isopropyl (meth)acrylate, n-butyl (meth)acrylate, 2-ethylhexyl (meth)acrylate, and lauryl (meth)acrylate
(b) (meth)acrylate esters having an active hydrogen such as 2-hydroxyethyl (meth)acrylate, 2-hydroxypropyl (meth)acrylate, 2-hydroxybutyl (meth)acrylate, 3-hydroxypropyl (meth)acrylate, and 4-hydroxybutyl (meth)acrylate
(c) unsaturated carboxylic acids such as acrylic acid, methacrylic acid, maleic acid, and itaconic acid
(d) unsaturated amides such as acrylamide, N-methylolacrylamide, and diacetoneacrylamide
(e) other polymerizable monomers such as glycidyl methacrylate, styrene, vinyltoluene, vinyl acetate, acrylonitrile, dibutyl fumarate, p-styrenesulfonic acid, and allylsulfosuccinic acid

The polymerization method used is generally emulsion polymerization, but the resin may also be produced by suspension polymerization, dispersion polymerization or solution polymerization. In the case of emulsion polymerization, a stepwise polymerization can also be conducted.

[Polyester Resins]

There are no particular limitations on the polyester resins, and examples include polyester resins obtained by subjecting a single carboxylic acid or a carboxylic acid mixture, and a single polyhydric alcohol or a polyhydric alcohol mixture, to a condensation reaction.
Examples of the carboxylic acid include succinic acid, adipic acid, sebacic acid, dimer acid, maleic anhydride, phthalic anhydride, isophthalic acid, terephthalic acid, trimellitic acid, and pyromellitic acid.
Examples of the polyhydric alcohols include diols, triols, and tetraols.
Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethylpentanediol, 2-butyl-2-ethyl-1,3-propanediol, and 2,2-diethyl-1,3-propanediol.
Examples of the triols include glycerol and trimethylolpropane.
Examples of the tetraols include diglycerol, di(trimethylolpropane), and pentaerythritol.
Further, for example, polycaprolactones obtained by conducting a ring-opening polymerization of ε-caprolactone at the hydroxyl group of a low-molecular weight polyol may also be used as polyester resins.

[Polyether Resins]

Examples of the polyether resins include the resins described in (a) to (d) below.

(a) polyether polyols obtained by using a strongly basic catalyst to add a single alkylene oxide or a mixture of alkylene oxides to a single polyhydric hydroxy compound or a mixture thereof
(b) polyether polyols obtained by reacting an alkylene oxide with a polyamine compound
(c) polyether polyols obtained by ring-opening polymerization of a cyclic ether
(d) so-called polymer polyols obtained by polymerizing acrylamide or the like using a polyether polyol obtained in (a) to (c) as the reaction medium.

Examples of the polyhydric hydroxy compound in (a) include compounds (i) to (vi) listed below.

(i) compounds such as diglycerol, ditrimethylolpropane, pentaerythritol, and dipentaerythritol
(ii) sugar alcohol-based compounds such as erythritol, D-threitol, L-arabinitol, ribitol, xylitol, sorbitol, mannitol, galactitol, and rhamnitol
(iii) monosaccharides such as arabinose, ribose, xylose, glucose, mannose, galactose, fructose, sorbose, rhamnose, fucose, and ribodesose
(iv) disaccharides such as trehalose, sucrose, maltose, cellobiose, gentiobiose, lactose, and melibiose
(v) trisaccharides such as raffinose, gentianose, and melezitose
(vi) tetrasaccharides such as stachyose

Examples of the strongly basic catalyst in (a) above include hydroxides of alkali metals, alcoholates, and alkylamines. Examples of the alkali metals include lithium, sodium, and potassium.
Examples of the alkylene oxide in (a) include ethylene oxide, propylene oxide, butylene oxide, cyclohexene

oxide, and styrene oxide.

Examples of the polyamine compound in (b) include ethylenediamines.

Examples of the cyclic ether in (c) include tetrahydrofuran and the like.

Furthermore, in the coating composition of an embodiment of the present invention, these resins may be used, where necessary, in combination with other resins such as melamine-based curing agents, urethane dispersions and urethane acrylic emulsions.

Further, these resins are preferably emulsified, dispersed or dissolved in water. For this reason, the carboxyl groups and sulfonic acid groups and the like contained in the resins may be neutralized.

There are no particular limitations on the neutralizing agent used for neutralizing the carboxyl groups and sulfonic acid groups and the like, and examples include ammonia and water-soluble amine compounds.

Examples of the water-soluble amine compounds include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. One of these compounds may be used alone, or a combination of two or more compounds may be used.

Among the various possibilities, the use of a tertiary amine as the neutralizing agent is preferred, and triethylamine or dimethylethanolamine is particularly preferred.

<Other Components>

The coating composition of an embodiment of the present invention may also include other components besides the polyisocyanate composition and the resin. There are no particular limitations on these other components, and examples include antioxidants, photostabilizers, polymerization inhibitors, surfactants, solvents, and dewatering agents.

Examples of the antioxidants and photostabilizers include the compounds listed below in (a) to (e). The composition may include only one of these compounds, or a combination of two or more compounds.

(a) aliphatic, aromatic or alkyl group-substituted aromatic esters of phosphoric acid or phosphorus acid, or hypophosphorous acid derivatives, including monoalkyl phosphates and monoalkyl phosphites of 2 to 8 carbon atoms, dialkyl phosphates and dialkyl phosphites of 4 to 16 carbon atoms, as well as dilauryl phosphate, diphenyl phosphate, monolauryl phosphate, monophenyl phosphate, dilauryl phosphite, diphenyl phosphite, monolauryl phosphite and monophenyl phosphite, and in particular, acidic phosphate esters such as methyl acid phosphate, ethyl acid phosphate, isopropyl acid phosphate, butyl acid phosphate, dibutyl pyrophosphate, butoxyethyl acid phosphate, 2-ethylhexyl acid phosphate, alkyl (C12, C14, C16, C18) acid phosphate, isodecyl acid phosphate, isotridecyl acid phosphate, lauryl acid phosphate, stearyl acid phosphate, oleyl acid phosphate, tetracosyl acid phosphate, ethylene glycol acid phosphate, 2-hydroxyethyl methacrylate acid phosphate, dibutyl phosphate, and bis(2-ethylhexyl) phosphate, and phosphite triester compounds such as triphenyl phosphite, trisnonylphenyl phosphite, tricresyl phosphite, triethyl phosphite, tris(2-ethylhexyl) phosphite, tridecyl phosphite, trilauryl phosphite, tris(tridecyl) phosphite, trioleyl phosphite, diphenyl mono(2-ethylhexyl) phosphite, diphenyl monodecyl phosphite, diphenyl mono(tridecyl) phosphite, trilauryl trithiophosphite, diethyl hydrogen phosphite, bis(2-ethylhexyl) hydrogen phosphite, dilauryl hydrogen phosphite, dioleyl hydrogen phosphite, diphenyl hydrogen phosphite, tetraphenyl dipropylene glycol diphosphite, tetra (C12 to C15 alkyl)-4,4-isopropylidene diphenyl diphosphite, bis(decyl) pentaerythritol diphosphite, bis(tridecyl) pentaerythritol diphosphite, trisstearyl phosphite, distearyl pentaerythritol diphosphite, tris(2,4-di-t-butylphenyl) phosphite, 6-[3-(3-t-butyl-4-hydroxy-5-methylphenyl)propoxy]-2,4,8,10-tetra-t-butyldibenzo[d,f][1,3,2]dioxaphosphepin, methylenebis(di-t-butylphenyl) octyl phosphite, SUMILIZER-GP (a brand name manufactured by Sumitomo Chemical Co., Ltd.), ADEKA STAB HP10, ADEKA STAB PEP-8, ADEKA STAB PEP-36/36A, ADEKA STAB HP1500 and ADEKA STAB TPP (brand names manufactured by ADEKA Corporation), JP-333E (a brand name manufactured by Johoku Chemical Co., Ltd.) and IRGAFOS 168 (a brand name manufactured by BASF Corporation)

(b) phosphorus compounds such as phenylphosphonic acid, phenylphosphinic acid, diphenylphosphonic acid, polyphosphonate, dialkyl pentaerythritol diphosphite, and dialkyl bisphenol A diphosphite

(c) phenol-based derivatives (and particularly hindered phenol compounds) such as 2,6-di-t-butylphenol, 2,4-dimethyl-6-t-butylphenol, 2,6-di-t-butyl-p-cresol (BHT), 2,6-di-t-butyl-4-ethylphenol, 2,4,6-tri-t-butylphenol, 2,6-di-t-butyl-4-s-butylphenol, 2,6-di-t-butyl-4-hydroxymethylphenol, n-octadecyl-β-(4'-hydroxy-3',5'-di-t-butylphenyl) propionate, 3,5-di-t-butyl-4-hydroxybenzyl phosphonate diethyl ester, 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(4-methyl-6-cyclohexylphenol), triethylene glycol N-bis-3-(3-t-butyl-4-hydroxy-5-methylphenyl)propionate, 1,6-hexanediol bis[3-(3,5-di-t-butyl-4-hydroxyphenyl)propionate, 4,4'-di and tri-thiobis(2,6-di-t-butylphenol), 2,2-thiodiethylene bis-[3-(3,5-di-t-butyl-4-hydroxyphenyl)propionate], 2,4-bis(n-octylthio)-6-(4-hydroxy-3',5'-di-t-butylamlino)-1,3,5-triazine, N,N'-hexamethylene bis-(3,5-di-t-butyl-4-hydroxyhydrocinnamide), N,N'-bis[3-(3,5-di-t-butyl-4-hydroxyphenyl)propionyl]hydrazine, calcium (3,5-di-t-butyl-4-hydroxybenzyl monoethyl phosphate), 1,3,5-trimethyl-2,4,6-tris(3,5-di-t-butyl-4-hydroxybenzyl)benzene, tris(3,5-di-t-butyl-4-hydroxyphenyl) isocyanurate, tris(3,5-di-t-butyl-4-hydroxybenzyl) isocyanurate, 1,3,5-tris[2[3-(3,5-di-t-butyl-4-hydroxyphenyl)propionyloxy]ethyl] isocyanate, tetrakis[methylene-3-(3',5'-di-t-butyl-4-hydroxyphenyl)propionate]methane, IRGANOX (a brand name manufactured by BASH Corporation), and ADEKA STAB (a brand name manufactured by Adeka Corporation)

(d) compounds containing sulfur such as thioether-based compounds, dithioate-based compounds, mercaptobenzimidazole-based compounds, thiocarbanilide-based compounds, and thiodipropionate esters

(e) tin-based compounds such as tin maleate and dibutyltin monoxide

Examples of the polymerization inhibitors include hydroquinones, phenols, cresols, catechols, and benzoquinones. Specific examples of the polymerization inhibitors include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. The composition may include only one of these compounds, or a combination of two or more compounds.

Examples of the surfactants include known anionic surfactants, cationic surfactants and amphoteric surfactants.

The total amount of antioxidants, photostabilizers, polymerization inhibitors and surfactants in the coating composition of an embodiment of the present invention, relative to the total mass of the coating composition, is preferably at least 0% by mass but not more than 10% by mass, more preferably at least 0% by mass but not more than 5% by mass, and even more preferably at least 0% by mass but not more than 2% by mass.

The solvents that may be used in the coating composition of an embodiment of the present invention may be hydrophilic solvents or hydrophobic solvents, but hydrophilic solvents are preferred. These solvents may be used individually or in mixtures.

There are no particular limitations on the hydrophobic solvents, and examples include mineral spirit, solvent naphtha, LAWS (Low Aromatic White Spirit), HAWS (High Aromatic White Spirit), toluene, xylene, cyclohexane, esters, ketones, and amides.

Examples of the esters include ethyl acetate and butyl acetate.

Examples of the ketones include acetone, methyl ethyl ketone, methyl isobutyl ketone, and cyclohexanone.

Examples of the amides include N,N-dimethylformamide and N,N-dimethylacetamide.

There are no particular limitations on the hydrophilic solvents, and examples include alcohols, ethers, and esters of ether alcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, dipropylene glycol monomethyl ether (DPM), and dipropylene glycol dimethyl ether.

Examples of the esters of ether alcohols include ethylene glycol monomethyl ether acetate, ethylene glycol monoethyl ether acetate, ethylene glycol monobutyl ether acetate (BGA), diethylene glycol monoethyl ether acetate, diethylene glycol monobutyl ether acetate, propylene glycol monomethyl ether acetate (PMA), propylene glycol monomethyl ether acetate, and dipropylene glycol monomethyl ether acetate.

The amount of the solvent, relative to the total mass of the coating composition, is preferably at least 0% by mass but not more than 90% by mass, more preferably at least 0% by mass but not more than 50% by mass, and even more preferably at least 0% by mass but not more than 30% by mass.

Examples of the dewatering agents include organic alkoxy compounds, including orthformate esters such as methyl orthoformate and ethyl orthoformate, and dimethoxypropane, monofunctional isocyanates, including aliphatic monoisocyanates such as methyl isocyanate, ethyl isocyanate and propyl isocyanate, and aromatic monoisocyanates such as Additive TI (a product name) (manufactured by Covestro AG, p-toluenesulfonyl isocyanate), powdered metal oxides or carbides having high porosity, such as synthetic silica, activated alumina, zeolites and activated carbon, calcium compounds such as calcined gypsum, soluble gypsum and calcined lime, and metal alkoxides such as aluminum isopropylate, aluminum sec-butyrate, zirconium n-butyrate, ethyl silicate and vinyltrimethoxysilane.

The coating composition of an embodiment of the present invention may also include the types of additives typically added to coating materials. Examples of these additives include inorganic pigments, organic pigments, extender pigments, silane coupling agents, titanium coupling agents, organophosphates, organophosphites, thickeners, leveling agents, thixotropic agents, antifoaming agents, freeze stabilizers, matting agents, crosslinking reaction catalysts (catalysts for accelerating curing), anti-skinning agents, dispersants, swelling agents, fillers, plasticizers, lubricants, reducing agents, preservatives, mold inhibitors, deodorants, anti-yellowing agents, ultraviolet absorbers, antistatic agents or charge regulating agents, and anti-settling agents. Any one of these additives may be used alone, or a combination of two or more additives may be used.

«Coated Substrate»

A coated substrate of an embodiment of the present invention is a substrate that has been coated with the coating composition described above. The coated substrate of this embodiment has a coating layer formed from a coating film obtained by curing the coating composition described above.

As a result of having this coating layer described above, a coated substrate of an embodiment of the present invention exhibits excellent drying properties, gloss, hardness, water resistance and salt water spray resistance.

The coated substrate may also include a typical primer layer between the desired substrate and the coating layer.

Examples of the substrate include metals, wood, glass, stone, ceramic materials, concrete, hard and flexible plastics, textile products, leather products, and paper.

EXAMPLES

The present invention is described below in further detail using a series of example and comparative examples, but the present invention is not limited to the following examples, provided the examples remain within the scope of the present invention.

In the examples and comparative examples, the physical properties and evaluations of the polyisocyanate compositions were measured and evaluated using the methods described below. Unless specifically stated otherwise, "parts" and "%" refer to "parts by mass" and "% by mass" respectively.

<Methods for Measuring Physical Properties>

[Physical Property 1]

(Viscosity)

The viscosity was measured at 25°C using an E-type viscometer (manufactured by Tokimec Inc.). A standard rotor (1°34' × R24) was used. The rotational rate was set as follows.

(Rotational rate)

100 rpm (in the case of viscosity less than 128 mPa·s)
50 rpm (in the case of viscosity of at least 128 mPa·s but less than 256 mPa·s)
20 rpm (in the case of viscosity of at least 256 mPa·s but less than 640 mPa·s)
10 rpm (in the case of viscosity of at least 640 mPa·s but less than 1,280 mPa·s)
5 rpm (in the case of viscosity of at least 1,280 mPa·s but less than 2,560 mPa·s)
2.5 rpm (in the case of viscosity of at least 2,560 mPa·s but less than 5,120 mPa·s)

[Physical Property 2]

(Isocyanate group (NCO) Content)

Using the polyisocyanate compositions obtained in the examples and comparative examples as samples, measurement of the isocyanate group content was conducted in accordance with the method described in JIS K7301-1995 (Testing methods for tolylene diisocyanate type prepolymers for thermosetting urethane elastomers). A more detailed description of the method for measuring the isocyanate group content (NCO%) is described below.

(1) One gram (Wg) of the sample was placed in a 200 mL conical flask, and 20 mL of toluene was added to the flask to dissolve the sample.
(2) Subsequently, 20 mL of a 2.0 N di-n-butylamine toluene solution was added to the flask, and the flask was left to stand for 15 minutes.
(3) Next, 70 mL of 2-propnaol was added to the flask to dissolve the contents and obtain a solution.
(4) The solution obtained in (3) was titrated using a 1 mol/L hydrochloric acid solution, and the sample titer (V1 mL) was determined.
(5) Using the same method as (1) to (3), measurement was conducted without adding the sample, and a blank titer (V0 mL) was determined.

Based on the sample titter and the blank titer determined above, the isocyanate group content (NCO%) was calculated using the following formula.

$$\text{NCO content (\% by mass)} = (V0-V1)\times 42/[W(1\ g)\times 1000]\times 100$$

[Physical Property 3]

(Number Average Molecular Weight (Mn))

The number average molecular weight of the polyisocyanate composition was measured by GPC under the following measurement conditions, thus obtaining a polystyrene-equivalent number average molecular weight.

(Measurement conditions)

Apparatus: HLC-8120GPC (brand name), manufactured by Tosoh Corporation
Columns: 1 × TSKgel Super H1000 column (brand name), 1 × TSKgel Super H2000 column (brand name), and 1 × TSKgel Super H3000 column (brand name), all manufactured by Tosoh Corporation
Carrier: tetrahydrofuran
Detection method: refractive index detector

[Physical Property 4]

(Mole Fraction of Each Bonded Group)

For each of the obtained polyisocyanate compositions, a $^{13}$C-NMR measurement was conducted using a Biospin Avance 600 (brand name) manufactured by Bruker Corporation. Specific measurement conditions were as follows.

(Measurement conditions)

$^{13}$C-NMR apparatus: AVANCE 600 (manufactured by Bruker Corporation)

CryoProbe (manufactured by Bruker Corporation)
CryoProbe (a registered trademark)
CPDUL
600S3-C/H-D-05Z

Resonance frequency: 150 MHz
Concentration: 60 wt/vol%
Shift reference: $CDCl_3$ (77 ppm)
Accumulation number: 10,000
Pulse program: zgpg 30 (proton perfect decoupling method, waiting time: 2 sec)

The signal integral values described below were divided by the number of measured carbons to determine each of the mole fractions relative to the combined total (100 mol%) of isocyanurate groups, iminooxadiazinedione groups, allophanate groups and uretdione groups.

Isocyanurate group: (integral value near 148.6 ppm) ÷ 3
Iminooxadiazinedione group: (integral value near 137.3 ppm) ÷ 1
Allophanate group: (integral value near 154 ppm) ÷ 1
Uretdione group: (integral value near 157 ppm) ÷ 2

[Physical Property 5]

(Average Number of Ethylene Oxide (EO) Repeating Units (EO number))

The average number of ethylene oxide (EO) repeating units introduced into the polyisocyanate composition (EO number) was calculated using the following method. Specifically, using the polyisocyanate composition as a sample, the EO number was determined by proton nuclear magnetic resonance (NMR) under the measurement conditions listed below. By assigning the integral of the relative intensity corresponding with alkylene groups and the integral of the relative intensity corresponding with alkyl groups, the average number of ethylene oxide (EO) repeating units within the polyisocyanate composition (the EO number) was determined.

(Measurement conditions)

NMR apparatus: Bruker Biospin Avance 600 (brand name)
Measured nucleus: 1H
Frequency: 600 MHz
Solvent: $CDCl_3$
Accumulation number: 256

[Physical Property 6]

(Proportion Modified by Polyalkylene Glycol Alkyl Ether (Modification Ratio))

Using the polyisocyanate composition as a sample, the modification ratio represents the proportion of 100 molar equivalents of isocyanate groups of the raw material polyisocyanate that have been modified by the polyalkylene glycol alkyl ether, and is determined by liquid chromatography (LC) from the peak surface area ratio between the unmodified isocyanurate trimer, single modified isocyanurate trimer, double modified isocyanurate trimer, and triple modified isocyanurate trimer at a measurement wavelength of 220 nm. The apparatus and conditions used were as follows.

(Measurement conditions)

LC apparatus: UPLC (brand name) manufactured by Waters Corporation
Column: ACQUITY UPLC HSS T3 1.8 μm C18, internal diameter 2.1 mm × length 50 mm, manufactured by Waters Corporation)
Flow rate: 0.3 mL/min
Mobile phases: A = 10 mM aqueous solution of ammonium acetate, B = acetonitrile
Gradient conditions: initial mobile phase composition of A/B = 98/2, and then following injection of the sample, the proportion of B is increased linearly, such that at 10 minutes, A/B = 0/100
Detection method: photodiode array detector, measurement wavelength: 220 nm

[Physical Property 7]

(Amount of Portion Derived from Polyalkylene Glycol Alkyl Ether)

Using the polyisocyanate composition as a sample, the amount of the portion derived from the polyalkylene glycol alkyl ether of the modified polyisocyanate within the polyisocyanate composition was calculated in the following manner, from the isocyanate group content measured in [Physical Property 2], the molecular weight of the polyalkylene glycol alkyl ether calculated from the average number for n in the polyalkylene glycol alkyl ether determined in [Physical Property 5], and the modification ratio determined in [Physical Property 6].

$$[\text{Amount } (\%)] = (\text{isocyanate group content } (\% \text{ by mass}))/100/42/\{(100)\text{-}(\text{modification ratio } (\%))\} \times (\text{modification ratio } (\%)) \times (\text{molecular weight of polyalkylene glycol alkyl ether}) \times 100$$

The molecular weight of the polyalkylene glycol alkyl ether is determined, for example, in the case where the polyalkylene glycol alkyl ether used is polyethylene glycol (mono)methyl ether, in the following manner.

$$[\text{Molecular weight of polyethylene glycol (mono)methyl ether}] = (\text{molecular weight of methyl group } (15)) + (\text{molecular weight of hydroxyl group } (17)) + \{(\text{molecular weight of ethylene oxide } (44)) \times (\text{average number for n})\}$$

<Evaluation Methods>

[Preparation Example 1]

(Production of Coating Composition X)

To each of the solvents listed in Table 1 to Table 5, p-toluenesulfonyl isocyanate (Additive TI, a product name) was added in an amount of 0.5 wt% relative to the solvent, and the mixture was stirred for 30 minutes at 40°C and then left to stand. Next, the polyisocyanate composition obtained in one of the examples or comparative examples was added to the solvent and dissolved in sufficient amount to achieve a solid fraction of 60% by mass, thus completing preparation of a polyisocyanate composition solution. Subsequently, 60 g of an acrylic polyol aqueous dispersion (product name: Bayhydrol A2470, hydroxyl group content in resin: 3.9 wt%, solid fraction: 45 wt%, manufactured by Covestro AG) and 20 g of ion-exchanged water were weighed into a container, and the resulting mixture was stirred for two minutes at 600 rpm using a propeller blade, thus preparing an acrylic polyol aqueous dilution. Each polyisocyanate solution was added to a sample of this acrylic polyol aqueous dilution in sufficient amount to achieve a ratio (NCO/OH) of the molar amount of isocyanate groups in the polyisocyanate composition obtained in the example or comparative example relative to the molar amount of hydroxyl groups in the dilution of 1.5. Deionized water was then added to adjust the viscosity measured using a Ford cup (No. 4) to 20 seconds, and the resulting mixture was stirred for 10 minutes at 600 rpm using a propeller blade to obtain a coating composition X. Using each of the prepared coating compositions X, the evaluations described below were conducted.

[Preparation Example 2]

(Production of Coating Composition Y)

To each of the solvents listed in Table 1 to Table 5, p-toluenesulfonyl isocyanate (Additive TI, a product name) was added in an amount of 1.0 wt% relative to the solvent, and the mixture was stirred for 30 minutes at 40°C and then left to stand. Next, the polyisocyanate composition obtained in one of the examples or comparative examples was added to the solvent and dissolved in sufficient amount to achieve a solid fraction of 60% by mass, thus completing preparation of a polyisocyanate composition solution. Subsequently, 40 g of an acrylic polyol aqueous dispersion (product name: Setaqua 6515, hydroxyl group content in resin: 3.3 wt%, solid fraction: 45 wt%, manufactured by Allnex Resins GmbH) was weighed into a container. Each polyisocyanate solution was added to a sample of this acrylic polyol dispersion in sufficient amount to achieve a ratio (NCO/OH) of the molar amount of isocyanate groups in the polyisocyanate composition obtained in the example or comparative example relative to the molar amount of hydroxyl groups in the acrylic polyol dispersion of 1.5. Deionized water was then added to adjust the viscosity of the coating composition, measured using a Ford cup (No. 4), to 20 seconds, and the resulting mixture was stirred for 10 minutes at 600 rpm using a propeller blade to obtain a coating composition Y. Using each of the prepared coating compositions Y, the evaluations described below were conducted.

[Evaluation 1]

(Viscosity Change upon Blending)

The viscosity of the acrylic polyol aqueous dilution obtained in Preparation Example 1 was measured as the initial viscosity using an E-type viscometer. Further, the viscosity was then re-measured following the addition and stirring of the polyisocyanate solution. The percentage of the viscosity following the addition of the polyisocyanate solution relative to the viscosity prior to the addition was calculated as the viscosity change percentage, and the viscosity change upon blending was then evaluated against the evaluation criteria shown below.

(Evaluation criteria)

o: viscosity change percentage of less than 400%
Δ: viscosity change percentage of at least 400% but less than 700%
×: viscosity change percentage of 700% or greater

[Evaluation 2]

(Pot Life)

Each of the coating compositions X prepared using the method described above was left to stand in an atmosphere at 23°C and 50% RH, and the initial viscosity and the viscosity after two hours were measured using an E-type viscometer.
Based on the obtained viscosity values, the pot life of the coating composition was evaluated against the evaluation criteria shown below.

(Evaluation criteria)

oo: viscosity change percentage of less than 200%
o: viscosity change percentage of at least 200% but less than 220%
Δ: viscosity change percentage of at least 220% but less than 250%
×: viscosity change percentage of 250% or greater

[Evaluation 3]

(Drying Properties)

Using each of the coating compositions X prepared using the method described above, the coating composition was applied to a glass plate in an amount sufficient to form a film thickness of 40 μm, and the composition was then cured at 23°C/50% RH to obtain a coating film. After 7 hours had elapsed, a cotton ball (of circular cylindrical shape with a diameter of 2.5 cm, and a height of 2.0 cm) was placed on top of the coating film, and a weight of 100 g was then placed on top of the cotton ball for 60 seconds. Subsequently, the weight and the cotton ball were removed, and the coating film was inspected and evaluated for visible traces of the cotton.

(Evaluation criteria)

o: absolutely no visible traces of the cotton
Δ: some minor traces of the cotton remained
×: many traces of the cotton remained

[Evaluation 4]

(Gloss)

A substrate was first prepared in advance by spraying a commercially available solvent-based two-liquid acrylic urethane white enamel coating material onto an aluminum plate, setting the coating material, subsequently conducting drying at 80°C for two hours and aging at room temperature for at least two weeks, and then sanding the surface with a #400 sandpaper until the 60° gloss value was 10% or lower. Each of the coating compositions prepared using the method described above was applied to the substrate using a sprayer in an amount sufficient to form a dried film thickness of about 40 μm, and the composition was dried for one day in an atmosphere of 23°C and 50% RH. Subsequently, a gloss meter (digital variable gloss meter UDV-6P (brand name) manufactured by Suga Test Instruments Co., Ltd.) was used to measure the 60° gloss value under the conditions prescribed in JIS Z8741. The gloss of the coating film was then evaluated against the evaluation criteria shown below.

(Evaluation criteria)

oo: 60° gloss value of 90% or higher
o: 60° gloss value of at least 85% but less than 90%
Δ: 60° gloss value of at least 80% but less than 85%
×: 60° gloss value of less than 80%

[Evaluation 5]

(Pencil Hardness)

Using each of the coating compositions X prepared using the method described above, the coating composition was applied to a soft steel plate in an amount sufficient to form a film thickness of 40 μm. Subsequently, the composition was dried in an atmosphere of 23°C and 50% RH, and after 7 days, the pencil hardness of the obtained coating film was measured using the method described in JIS K 5600-5-4. The hardness increases in the order shown below. A result of HB or higher was evaluated as representing favorable hardness.

B<HB<F<H<2H

[Evaluation 6]

(Water Resistance)

Using each of the coating compositions X prepared using the method described above, the composition was sprayed onto an aluminum plate in an amount sufficient to form a dried film thickness of 40 μm. The composition was then dried in an atmosphere of 23°C and 50% RH for 7 days to obtain a coating film. Subsequently, the aluminum plate with the coating film (hereafter sometimes referred to as "the coated plate") was immersed in 23°C water for 24 hours, and following removal of any residual water from the surface, the state of the coating film was inspected. The water resistance of the coating film was evaluated against the evaluation criteria shown below. The term "blister" used in the following evaluation criteria means a bubble or swelling in the surface of the coating film.

(Evaluation criteria)

◦◦: no blisters after 4 or more days
◦: after 4 days, some blisters, cloudiness or coating film dissolution
Δ: after 3 days, some blisters, cloudiness or coating film dissolution
×: after less than 3 days, some blisters, cloudiness or coating film dissolution

[Evaluation 7]

(Salt Water Spray Resistance)

Using a polished cold rolled steel plate (150 mm × 70 mm) prescribed in JIS K5600-1-4 (SPCC) as a substrate, an epoxy-based rust-inhibiting coating material "Aquamax EX II" (brand name, manufactured by Kansai Paint Co., Ltd.) was sprayed onto the substrate, and then dried at 23°C/50% RH for five days. Subsequently, the coating composition Y prepared using the method described above was sprayed onto the substrate in an amount sufficient to form a dried film thickness of 35±5 μm, and the composition was then dried in an atmosphere of 23°C and 50% RH for 7 days to obtain a coated plate. The thus obtained coated plate was subjected to cross cuts as prescribed in JIS K5600-7-1, and then tested under the measurement conditions described below. Following testing, the state of the coating film on the coated plate was inspected, and an evaluation was performed against the evaluation criteria described below.

(Measurement conditions)

Apparatus: STP-90V (brand name) (manufactured by Suga Test Instruments Co., Ltd.)
Temperature: 35±1°C
Spray liquid: 5% by mass neutral salt water (pH of at least 6.5 but not more than 7.2)
Spray time: 100 hours

(Evaluation criteria)

◦: some rust at a portion of the cuts
Δ: rust or swelling at a portion of the cuts
×: rust or swelling at all of the cuts

<Synthesis of Sulfonic Acid Amine Salt>

[Synthesis Example 1]

(Synthesis of HES/TBA)

Ten parts by mass of 1 propanol were added to 20 parts by mass of a 70% by mass aqueous solution of 2-hydroxyethanesulfonic acid (hereafter sometimes abbreviated as "HES"), and the mixture was stirred to obtain a solution. Subsequently, sufficient tributylamine (hereafter sometimes abbreviated as "TBA") was weighed out to produce a molar equivalence ratio of 1 relative to the HES, the tributylamine was diluted with the same number of parts by mass of 1-propanol, and the resulting liquid was added dropwise to the above stirred solution. One hour after starting the dropwise addition, the stirring was halted, and the water and solvent were removed with an evaporator to obtain a 2-hydroxyethanesulfonic acid tributylamine salt (hereafter sometimes abbreviated as "HES/TBA") with a solid fraction of 99.8% by mass.

<Production of Polyisocyanate Compositions>

[Example 1]

(Production of Polyisocyanate Composition PA-a1)

The inside of a four-neck flask fitted with a stirrer, a thermometer, a reflux condenser, a nitrogen blowing tube and a dropping funnel was flushed with nitrogen and then charged with 1,000 parts by mass of HDI and 3.0 parts by mass of isobutanol, and the temperature inside the reaction flask was held at 70°C under constant stirring. Subsequently, 1.0 parts by mass of a solution of tetramethylammonium caprate diluted to 5% by mass with isobutanol was added to the flask as an isocyanuration catalyst, an allophanation reaction and an isocyanuration reaction were allowed to proceed, and when the conversion rate reached 22% by mass, phosphoric acid was added to halt the reactions. The reaction liquid was heated at 100°C for one hour, and following cooling and filtering, the unreacted HDI was removed using a

thin film evaporator, thus obtaining a polyisocyanate composition PA-a1. The viscosity of the polyisocyanate composition PA-a1 at 25°C was 1,100 mPa·s, and the NCO content was 22.9% by mass. The various physical properties were as shown in Table 1.

[Example 2]

(Production of Polyisocyanate Composition PA-a2)

The inside of a similar apparatus to Example 1 was flushed with nitrogen and then charged with 1,000 parts by mass of HDI, and the temperature inside the reaction flask was held at 80°C for two hours under constant stirring. Subsequently, 1.0 parts by mass of a solution of tetramethylammonium caprate diluted to 5% by mass with isobutanol was added to the flask as an isocyanuration catalyst, and an isocyanuration reaction was conducted. When the increase in the refractive index of the reaction liquid reached 0.012, phosphoric acid was added to halt the reactions. The reaction liquid was then heated at 100°C for one hour, and following cooling and filtering, was purified twice using a thin film evaporator under conditions of 160°C and 0.2 Torr, thus obtaining a polyisocyanate composition PA-a2. The thus obtained polyisocyanate composition PA-a2 had a viscosity at 25°C of 1,350 mPa·s, and an NCO content of 23.0% by mass. The various physical properties were as shown in Table 1.

[Example 3]

(Production of Polyisocyanate Composition PA-a3)

The inside of a similar apparatus to Example 1 was flushed with nitrogen and then charged with 1,000 parts by mass of HDI and 30 parts by mass of 2-ethylhexanol, and a urethanation reaction was conducted at 90°C for one hour under constant stirring. Next, 1.0 parts by mass of a solution of tetramethylammonium caprate diluted to 5% by mass with isobutanol was added to the flask as an allophanation and isocyanuration catalyst, and an allophanation reaction and an isocyanuration reaction were conducted. When the increase in the refractive index of the reaction liquid reached 0.012, phosphoric acid was added to halt the reactions. The reaction liquid was then heated at 160°C for one hour, and following cooling and filtering, the unreacted HDI was removed in the same manner as Example 1, thus obtaining a polyisocyanate composition PA-a3. The thus obtained polyisocyanate composition PA-a3 had a viscosity at 25°C of 470 mPa·s, and an NCO content of 23.2% by mass. The various physical properties were as shown in Table 1.

[Example 4]

(Production of Polyisocyanate Composition PA-a4)

The inside of a similar apparatus to Example 1 was flushed with nitrogen, and 6.0 parts by mass of a polyethylene glycol monomethyl ether in which the average number of ethylene oxide repeating units was 9.0 (brand name: MPG-130, manufactured by Nippon Nyukazai Co., Ltd.) was heated to 110°C and then added to 100 parts by mass of the polyisocyanate composition PA-a1 over a period of 60 minutes under constant stirring. Subsequently, 50 ppm by mass of butyl acid phosphate relative to the total mass of raw materials, 100 ppm by mass of a hindered phenol-based antioxidant (Irganox 1135 (product name), manufactured by BASF Japan Ltd.) relative to the total mass of raw materials, 100 ppm by mass of 2,6-di-tert-butyl-p-cresol relative to the total mass of raw materials, and 50 ppm by mass of tridecyl phosphate relative to the total mass of raw materials were added to the flask, and the reaction was allowed to proceed at 110°C for 5 hours under stirring, thus obtaining a polyisocyanate composition PA-a4. The various physical properties were as shown in Table 2.

[Examples 5 to 11]

(Production of Polyisocyanate Compositions PA-a5 to PA-a11)

With the exception of using the raw materials and blend amounts shown in Table 2 and Table 3, the same method as Example 4 was used to obtain each polyisocyanate composition. The various physical properties were as shown in Tables 2 and 3.

[Example 12]

(Production of Polyisocyanate Composition PA-a12)

The inside of a similar apparatus to Example 1 was flushed with nitrogen, and then 2.2 parts by mass of the 2-hydroxyethanesulfonic acid tributylamine salt (HES/TBA) obtained in Synthesis Example 1 was added to 100 parts by mass of the polyisocyanate composition PA-a1. A reaction was then conducted under a nitrogen atmosphere, under reflux, and with constant stirring at 120°C for 3 hours. The reflux condenser was then removed, and reaction was continued for a further one hour at 100°C under stirring. Following completion of the reaction, the temperature was lowered to 50°C, 0.5 parts by mass of trilauryl phosphite (JP-312L (brand name), manufactured by Johoku Chemical Co., Ltd.) was added and stirred thoroughly, thus obtaining a polyisocyanate composition PA-a12. The various physical properties were as shown in Table 3.

[Example 13]

(Production of Polyisocyanate Composition PA-a13)

With the exception of using the raw materials and blend amounts shown in Table 3, the same method as Example 12 was used to obtain a polyisocyanate composition. The various physical properties were as shown in Table 3.

[Comparative Example 1]

(Production of Polyisocyanate Composition PA-b1)

The inside of a similar apparatus to Example 1 was flushed with nitrogen and then charged with 1,000 parts by mass of HDI and 3.1 parts by mass of 2-ethylhexanol, and the temperature inside the reaction flask was held at 80°C for two hours under constant stirring. Subsequently, tetramethylammonium caprate was added to the flask as an isocyanuration catalyst, and when the yield reached 40% by mass, phosphoric acid was added to halt the reaction. The reaction liquid was filtered, and the unreacted HDI was removed using a thin film evaporator, thus obtaining a polyisocyanate composition PA-b1. The viscosity of the obtained polyisocyanate composition PA-b1 at 25°C was 2,600 mPa·s, and the NCO content was 21.7% by mass. The various physical properties were as shown in Table 4.

[Comparative Example 2]

(Production of Polyisocyanate Composition PA-b2)

The inside of a similar apparatus to Example 1 was flushed with nitrogen and then charged with 6,000 parts by mass of HDI and 5.0 parts by mass of isobutanol, and the temperature inside the reaction flask was held at 80°C for two hours under constant stirring. Subsequently, 5.0 parts by mass of a solution of trimethyl-2-methyl-2-hydroxyethylammonium hydroxide diluted to 5% by mass with isobutanol was added as an isocyanuration catalyst, and an isocyanuration reaction was conducted. When the NCO content of the reaction liquid reached 45% by mass, 0.36 parts by mass of dibutyl phosphate was added to halt the isocyanuration reaction. Subsequently, the internal reaction temperature was cooled to 50°C, 13.8 parts by mass of a 92% by mass solution of $CF_3CH_2CO_2$-$Bu_4P^+$ (containing 2% by mass of isopropanol and 6% by mass of methanol) was added, and an iminooxadiazinedionation reaction was conducted (with an isocyanurate group / iminooxadiazinedione group selectivity ratio of 50 mol%/50 mol%). When the NCO content of the reaction liquid reached 44.1% by mass, the reaction was halted by adding an isopropanol solution (14.4 parts by mass) containing a 40% by mass concentration of p-toluenesulfonic acid. The reaction liquid was then purified twice using a thin film evaporator under conditions of 160°C and 0.2 Torr, thus obtaining a polyisocyanate composition PA-b2. The thus obtained polyisocyanate composition PA-b2 had a viscosity at 25°C of 790 mPa·s, and an NCO content of 23.4% by mass. The various physical properties were as shown in Table 4.

[Comparative Example 3]

(Production of Polyisocyanate Composition PA-b3)

The inside of a similar apparatus to Example 1 was flushed with nitrogen and then charged with 6,000 parts by mass of HDI, and the temperature inside the reaction flask was held at 60°C for two hours under constant stirring. Subsequently, 80 parts by mass of tri-n-butylphosphine (Cytop, a product name) was added as an isocyanuration and

uretdionization catalyst, and an isocyanuration reaction and an uretdionization reaction were conducted. When the conversion rate reached 40% by mass, 140 parts by mass of methyl p-toluenesulfonate was added to halt the reaction. Following cooling and filtering of the reaction liquid, the unreacted HDI was removed using a thin film evaporator, thus obtaining a polyisocyanate composition PA-b3. The thus obtained polyisocyanate composition PA-b3 had a viscosity at 25°C of 320 mPa·s, and an NCO content of 22.0% by mass. The various physical properties were as shown in Table 4.

[Comparative Examples 4 and 5]

(Production of Polyisocyanate Compositions PA-b4 and PA-b5)

With the exception of using the raw materials and blend amounts shown in Table 4, the same method as Example 4 was used to obtain each polyisocyanate composition. The various physical properties were as shown in Table 4.

[Comparative Example 6]

(Production of Polyisocyanate Composition PA-b6)

With the exception of using the raw materials and blend amounts shown in Table 5, the same method as Example 1 was used to obtain a polyisocyanate composition. The various physical properties were as shown in Table 5.

[Comparative Example 7]

(Production of Polyisocyanate Composition PA-b7)

With the exception of using the raw materials and blend amounts shown in Table 5, the same method as Example 12 was used to obtain a polyisocyanate composition. The various physical properties were as shown in Table 5.
The physical properties and evaluation results for the polyisocyanate compositions obtained in each of the examples and comparative examples are shown below in Table 1 to Table 5.
In Table 1 to Table 5, the abbreviations for the solvents refer to the following compounds.

(Solvents)

BGA: butyl glycol acetate
PGDA: propylene glycol diacrylate
PMA: propylene glycol monoethyl ether acetate
DPM: dipropylene glycol monomethyl ether

[Table 1]

| | | | Example 1 | Example 2 | Example 3 |
|---|---|---|---|---|---|
| Polyisocyanate composition | | | PA-a1 | PA-a2 | PA-a3 |
| Composition | Polyisocyanate (composition) | type | PA-a1 | PA-a2 | PA-a3 |
| | | parts by mass | - | - | - |
| | Hydrophilic compound (parts by mass) | MPG-130 | - | - | - |
| | | HES/TBA | - | - | - |
| Physical properties | Mass fraction (A) of compounds with a number average molecular weight of at least 200 but less than 400 (% by mass) | | 1.6 | 1.5 | 13.0 |
| | Mass fraction (B) of compounds with a number average molecular weight of at least 400 but less than 700 (% by mass) | | 70.5 | 67.0 | 68.9 |
| | (B)/(A) | | 44.1 | 44.7 | 5.3 |
| | (A)+(B) (% by mass) | | 72.1 | 68.5 | 81.9 |
| | Mass fraction of compounds with a number average molecular weight of 1,000 or greater (% by mass) | | 9.0 | 12.0 | 7.4 |
| | Most prevalent bonded group | | Isocyanurate group | Isocyanurate group | Isocyanurate group |
| | Mole fraction (C) of iminooxadiazinedione groups (mol%) | | 2.3 | 1.1 | 0.3 |
| | Mole fraction (D) of isocyanurate groups (mol%) | | 86.9 | 95.7 | 74.1 |
| | (D)/(C) | | 37.8 | 87.0 | 247.0 |
| | Mole fraction of uretdione groups (mol%) | | 1.5 | 0.5 | 12.0 |
| | Viscosity (mPa·s / 25°C) | | 1,100 | 1,350 | 470 |
| | NCO content (% by mass) | | 22.9 | 23.0 | 23.2 |
| Solvent | type | | BGA | BGA | BGA |
| | n-octanol/water distribution coefficient (logKow) | | 1.5 | 1.5 | 1.5 |
| Evaluations | Viscosity change upon blending | | o | o | o |
| | Pot life | | oo | oo | oo |
| | Drying properties | | oo | oo | Δ |
| | Gloss | | Δ | Δ | o |
| | Pencil hardness | | H | H | H |
| | Water resistance | | oo | oo | o |
| | Salt water spray resistance | | o | o | o |

[Table 2]

| | | | Example 4 | Example 5 | Example 6 | Example 7 | Example 8 |
|---|---|---|---|---|---|---|---|
| Polyisocyanate composition | | | PA-a4 | PA-a5 | PA-a6 | PA-a7 | PA-a8 |
| Composition | Polyisocyanate (composition) | type | PA-a1 | PA-a1 | PA-a1 | PA-a1 | PA-a2 |
| | | parts by mass | 100 | 100 | 100 | 100 | 100 |
| | Hydrophilic compound (parts by mass) | MPG-130 | 6.0 | 6.0 | 6.0 | 6.0 | 6.0 |
| | | HES/TBA | - | - | - | - | - |
| Physical properties | Mass fraction (A) of compounds with a number average molecular weight of at least 200 but less than 400 (% by mass) | | 0.6 | 0.6 | 0.6 | 0.6 | 0.8 |
| | Mass fraction (B) of compounds with a number average molecular weight of at least 400 but less than 700 (% by mass) | | 59.9 | 59.9 | 59.9 | 59.9 | 58.5 |
| | (B)/(A) | | 99.8 | 99.8 | 99.8 | 99.8 | 73.1 |
| | (A)+(B) (% by mass) | | 60.5 | 60.5 | 60.5 | 60.5 | 59.3 |
| | Mass fraction of compounds with a number average molecular weight of 1,000 or greater (% by mass) | | 9.1 | 9.1 | 9.1 | 9.1 | 12.1 |
| | Most prevalent bonded group | | Isocyanurate group | Isocyanurate group | Isocyanurate group | Isocyanurate group | Isocyanurate group |
| | Mole fraction (C) of iminooxadiazinedione groups (mol%) | | 2.3 | 2.3 | 2.3 | 2.3 | 1.1 |
| | Mole fraction (D) of isocyanurate groups (mol%) | | 86.9 | 86.9 | 86.9 | 86.9 | 95.7 |
| | (D)/(C) | | 37.8 | 37.8 | 37.8 | 37.8 | 87.0 |
| | Mole fraction of uretdione groups (mol%) | | 1.5 | 1.5 | 1.5 | 1.5 | 0.5 |
| | Viscosity (mPa·s / 25°C) | | 1,050 | 1,050 | 1,050 | 1,050 | 1,400 |
| | NCO content (% by mass) | | 20.8 | 20.8 | 20.8 | 20.8 | 20.7 |
| Solvent | type | | BGA | PGDA | PMA | DPM | BGA |
| | n-octanol/water distribution coefficient (logKow) | | 1.5 | 0.8 | 0.3 | -0.06 | 1.5 |
| Evaluations | Viscosity change upon blending | | o | o | o | o | o |
| | Pot life | | o | o | o | o | o |
| | Drying properties | | o | o | o | o | o |
| | Gloss | | oo | oo | oo | oo | oo |
| | Pencil hardness | | F | F | F | F | F |
| | Water resistance | | o | o | o | o | o |
| | Salt water spray resistance | | o | o | o | o | o |

[Table 3]

| | | | | Example 9 | Example 10 | Example 11 | Example 12 | Example 13 |
|---|---|---|---|---|---|---|---|---|
| Polyisocyanate composition | | | | PA-a9 | PA-a10 | PA-a11 | PA-a12 | PA-a13 |
| Composition | Polyisocyanate (composition) | | type | PA-a3 | PA-a1 | PA-a1 | PA-a1 | PA-a1 |
| | | | parts by mass | 100 | 100 | 100 | 100 | 100 |
| | Hydrophilic compound (parts by mass) | | MPG-130 | 6.0 | 3.0 | 8.0 | - | - |
| | | | HES/TBA | - | - | - | 2.2 | 1.0 |
| Physical properties | Mass fraction (A) of compounds with a number average molecular weight of at least 200 but less than 400 (% by mass) | | | 10.4 | 0.9 | 0.4 | 1.3 | 1.4 |
| | Mass fraction (B) of compounds with a number average molecular weight of at least 400 but less than 700 (% by mass) | | | 59.8 | 62.1 | 52.1 | 65.1 | 67.6 |
| | (B)/(A) | | | 5.8 | 69.0 | 130.3 | 50.1 | 48.3 |
| | (A)+(B) (% by mass) | | | 70.2 | 63.0 | 52.5 | 66.4 | 69.0 |
| | Mass fraction of compounds with a number average molecular weight of 1,000 or greater (% by mass) | | | 7.6 | 9.3 | 9.5 | 9.5 | 9.0 |
| | Most prevalent bonded group | | | Isocyanurate group | Isocyanurate group | Isocyanurate group | Isocyanurate group | Isocyanurate group |
| | Mole fraction (C) of iminooxadiazinedione groups (mol%) | | | 0.3 | 2.3 | 2.3 | 2.3 | 2.3 |
| | Mole fraction (D) of isocyanurate groups (mol%) | | | 74.1 | 86.9 | 86.9 | 86.9 | 86.9 |
| | (D)/(C) | | | 247.0 | 37.8 | 37.8 | 37.8 | 37.8 |
| | Mole fraction of uretdione groups (mol%) | | | 12.0 | 1.5 | 1.5 | 1.5 | 1.5 |
| | Viscosity (mPa·s / 25°C) | | | 600 | 1,600 | 1,150 | 1,800 | 1,350 |
| | NCO content (% by mass) | | | 21.1 | 21.2 | 20.1 | 22.0 | 22.5 |
| Solvent | type | | | BGA | BGA | BGA | BGA | BGA |
| | n-octanol/water distribution coefficient (logKow) | | | 1.5 | 1.5 | 1.5 | 1.5 | 1.5 |
| Evaluations | Viscosity change upon blending | | | o | o | Δ | Δ | Δ |
| | Pot life | | | o | o | Δ | o | o |
| | Drying properties | | | Δ | o | Δ | o | oo |
| | Gloss | | | oo | o | oo | o | o |
| | Pencil hardness | | | F | F | HB | H | H |
| | Water resistance | | | o | o | Δ | o | o |
| | Salt water spray resistance | | | o | o | Δ | o | o |

[Table 4]

| | | | Comparative Example 1 | Comparative Example 2 | Comparative Example 3 | Comparative Example 4 | Comparative Example 5 |
|---|---|---|---|---|---|---|---|
| Polyisocyanate composition | | | PA-b1 | PA-b2 | PA-b3 | PA-b4 | PA-b5 |
| Composition | Polyisocyanate (composition) | type | PA-b1 | PA-b2 | PA-b3 | PA-b2 | PA-b1 |
| | | parts by mass | - | - | - | 100 | 100 |
| | Hydrophilic compound (parts by mass) | MPG-130 | - | - | - | 6.0 | 20.0 |
| | | HES/TBA | - | - | - | - | - |
| Physical properties | Mass fraction (A) of compounds with a number average molecular weight of at least 200 but less than 400 (% by mass) | | 0.3 | 4.0 | 44.0 | 2.9 | 0.2 |
| | Mass fraction (B) of compounds with a number average molecular weight of at least 400 but less than 700 (% by mass) | | 51.5 | 72.8 | 40.0 | 62.4 | 45.5 |
| | (B)/(A) | | 171.7 | 18.2 | 0.9 | 21.5 | 227.5 |
| | (A)+(B) (% by mass) | | 51.8 | 76.8 | 84.0 | 65.3 | 45.7 |
| | Mass fraction of compounds with a number average molecular weight of 1,000 or greater (% by mass) | | 22.8 | 6.8 | 8.6 | 6.9 | 9.8 |
| | Most prevalent bonded group | | Isocyanurate group | Iminooxa-diazinedione group | Uretdione group | Iminooxa-diazinedione group | Isocyanurate group |
| | Mole fraction (C) of iminooxadiazinedione groups (mol%) | | 2.5 | 43.2 | 7.4 | 43.2 | 2.3 |
| | Mole fraction (D) of isocyanurate groups (mol%) | | 92.6 | 49.8 | 16.3 | 49.8 | 86.9 |
| | (D)/(C) | | 37.0 | 1.2 | 2.2 | 1.2 | 37.8 |
| | Mole fraction of uretdione groups (mol%) | | 0 | 4.0 | 44.0 | 2.0 | 0 |
| | Viscosity (mPa·s / 25°C) | | 2,600 | 790 | 320 | 1,070 | 1,300 |
| | NCO content (% by mass) | | 21.7 | 23.4 | 22.0 | 20.8 | 17.7 |
| Solvent | type | | BGA | BGA | BGA | BGA | BGA |
| | n-octanol/water distribution coefficient (logKow) | | 1.5 | 1.5 | 1.5 | 1.5 | 1.5 |
| Evaluations | Viscosity change upon blending | | Δ | o | o | o | × |
| | Pot life | | o | oo | oo | o | × |
| | Drying properties | | oo | o | × | Δ | × |
| | Gloss | | × | o | o | o | oo |
| | Pencil hardness | | - | F | HB | HB | B |
| | Water resistance | | - | oo | × | Δ | Δ |
| | Salt water spray resistance | | - | × | o | × | × |

[Table 5]

| | | | Comparative Example 6 | Comparative Example 7 |
|---|---|---|---|---|
| Polyisocyanate composition | | | PA-b6 | PA-b7 |
| Composition | Polyisocyanate (composition) | type | PA-a1 | PA-a1 |
| | | parts by mass | - | - |
| | Hydrophilic compound (parts by mass) | MPG-130 | - | - |
| | | HES/TBA | - | 6.0 |
| Physical properties | Mass fraction (A) of compounds with a number average molecular weight of at least 200 but less than 400 (% by mass) | | 1.6 | 1.0 |
| | Mass fraction (B) of compounds with a number average molecular weight of at least 400 but less than 700 (% by mass) | | 70.5 | 57.2 |
| | (B)/(A) | | 44.1 | 57.2 |
| | (A)+(B) (% by mass) | | 72.1 | 58.2 |
| | Mass fraction of compounds with a number average molecular weight of 1,000 or greater (% by mass) | | 9 | 11.1 |
| | Most prevalent bonded group | | Isocyanurate group | Isocyanurate group |
| | Mole fraction (C) of iminooxadiazinedione groups (mol%) | | 2.3 | 2.3 |
| | Mole fraction (D) of isocyanurate groups (mol%) | | 86.9 | 86.9 |
| | (D)/(C) | | 37.8 | 37.8 |
| | Mole fraction of uretdione groups (mol%) | | 1.5 | 1.5 |
| | Viscosity (mPa·s / 25°C) | | 1,100 | 8,000 |
| | NCO content (% by mass) | | 22.9 | 20.7 |
| Solvent | type | | Cyclohexane | BGA |
| | n-octanol/water distribution coefficient (logKow) | | 3.4 | 1.5 |
| Evaluations | Viscosity change upon blending | | - | × |
| | Pot life | | - | × |
| | Drying properties | | - | o |
| | Gloss | | - | o |
| | Pencil hardness | | - | H |
| | Water resistance | | - | o |
| | Salt water spray resistance | | - | o |

From Table 1 to Table 5, it is evident that for the polyisocyanate compositions PA-a1 to PA-a13 (Examples 1

to 13), which contained a specific mass ratio of polyisocyanate having a number average molecular weight within a specified numerical range, and in which, among the bonded groups derived from the isocyanate groups within the polyisocyanate, the mole fraction of isocyanurate groups was the highest, the viscosity change upon blending was favorably small, the pot life when used in a water-based coating composition was good, and the drying properties, gloss, hardness, water resistance and salt water spray resistance when used in a coating film were excellent.

Further, comparison of the polyisocyanate compositions PA-a1 and PA-a4 (Examples 1 and 4), PA-a2 and PA-a8 (Examples 2 and 8), and PA-a3 and PA-a9 (Examples 3 and 9), in which a portion of the isocyanate groups of the polyisocyanate were either modified by a hydrophilic compound or unmodified respectively, revealed that in the polyisocyanate compositions in which a portion of the isocyanate groups of the polyisocyanate were unmodified by a hydrophilic compound, the pot life upon use in a water-based coating composition and the hardness upon use in a coating film tended to be superior, whereas in the polyisocyanate compositions in which a portion of the isocyanate groups of the polyisocyanate had been modified by a hydrophilic compound, the gloss upon use in a coating film tended to be superior.

Furthermore, comparison of the polyisocyanate compositions PA-a4, and PA-a10 to PA-al3 (Examples 4 and 10 to 13), in which the blend amounts of the hydrophilic compound were different, revealed that as the blend amount of the hydrophilic compound was reduced, the viscosity change upon blending, the pot life upon use in a water-based coating composition, and the drying properties, hardness, water resistance and salt water spray resistance upon use in a coating film tended to become more superior. In contrast, as the blend amount of the hydrophilic compound was increased, a tendency for an improvement in the gloss upon use in a coating film was observed.

On the other hand, in the case of the polyisocyanate compositions PA-b1 and PA-b5 (Comparative Examples 1 and 5) in which the ratio (B)/(A) exceeded 150, the polyisocyanate composition PA-b3 (Comparative Example 3) in which the ratio (B)/(A) was less than 1, and the polyisocyanate compositions PA-b2 and PA-b4 (Comparative Examples 2 and 4) in which, among the bonded groups derived from the isocyanate groups within the polyisocyanate, the mole fraction of iminooxadiazinedione groups was the highest, a composition for which the viscosity change upon blending, the pot life upon use in a water-based coating composition, and the drying properties, gloss, hardness, water resistance and salt water spray resistance upon use in a coating film were all favorable could not be obtained.

Further, in the case of the polyisocyanate composition PA-a6 (Comparative Example 6) which contained a solvent for which the n-octanol/water distribution coefficient (logKow) was 3.4, dispersion in water could not be achieved, and a normal coating film could not be obtained.

Furthermore, in the case of the polyisocyanate composition PA-b7 (Comparative Example 7) in which the blend amount of the anionic hydrophilic compound was large, the viscosity change upon blending was large, and the pot life upon use in a water-based coating composition tended to shorten.

## INDUSTRIAL APPLICABILITY

The polyisocyanate composition of an embodiment of the present invention is able to provide a polyisocyanate composition that exhibits favorable viscosity change, good pot life when used in a water-based coating composition, and excellent drying properties, gloss, hardness, water resistance and salt water spray resistance when used in a coating film.

## Claims

**1.** A polyisocyanate composition comprising a polyisocyanate derived from at least one diisocyanate selected from the group consisting of aliphatic diisocyanates and alicyclic diisocyanates, wherein

among bonded groups derived from isocyanate groups within the polyisocyanate, a mole fraction of isocyanurate groups is the highest,
a ratio (B)/(A) of a mass fraction (B) of polyisocyanate for which a number average molecular weight is at least 400 but not more than 700, relative to a mass fraction (A) of polyisocyanate for which a number average molecular weight is at least 200 but less than 400, is at least 1 but not more than 150, and
a mass fraction of polyisocyanate for which a number average molecular weight is 1,000 or greater, relative to a total mass of the polyisocyanate composition, is at least 5% by mass but not more than 20% by mass.

**2.** The polyisocyanate composition according to Claim 1, wherein a molar ratio (D)/(C) of isocyanurate groups (D) relative to iminooxadiazinedione groups (C) is at least 5 but not more than 100.

**3.** The polyisocyanate composition according to Claim 1 or 2, wherein among bonded groups derived from isocyanate groups within the polyisocyanate composition, a mole fraction of iminooxadiazinedione groups (C), relative to a total

molar amount of isocyanurate groups, iminooxadiazinedione groups, allophanate groups and uretdione groups, is at least 0.5 mol% but not more than 40.0 mol%.

4. The polyisocyanate composition according to any one of Claims 1 to 3, wherein among bonded groups derived from isocyanate groups within the polyisocyanate composition, a mole fraction of uretdione groups, relative to a total molar amount of isocyanurate groups, iminooxadiazinedione groups, allophanate groups and uretdione groups, is at least 0.1 mol% but not more than 20.0 mol%.

5. The polyisocyanate composition according to any one of Claims 1 to 4, wherein a total mass fraction (A)+(B) of a mass fraction (A) of polyisocyanate for which a number average molecular weight is at least 200 but less than 400 and a mass fraction (B) of polyisocyanate for which a number average molecular weight is at least 400 but not more than 700, relative to a total mass of the polyisocyanate composition, is at least 50% by mass but not more than 80% by mass.

6. The polyisocyanate composition according to any one of Claims 1 to 5, further comprising a solvent for which an n-octanol/water distribution coefficient (logKow) is at least -1.0 but not more than 3.0.

7. The polyisocyanate composition according to any one of Claims 1 to 6, wherein a portion of isocyanate groups of the polyisocyanate have been modified with a hydrophilic compound.

8. The polyisocyanate composition according to Claim 7, wherein the hydrophilic compound is at least one compound selected from the group consisting of anionic compounds, cationic compounds and nonionic compounds.

9. The polyisocyanate composition according to Claim 8, wherein the anionic compound is at least one compound selected from the group consisting of compounds containing a carboxylic acid group, compounds containing a phosphoric acid group, and compounds containing a sulfonic acid group.

10. The polyisocyanate composition according to Claim 8, wherein the anionic compound includes a compound containing a sulfonic acid group, and
the compound containing a sulfonic acid group is at least one sulfonic acid selected from the group consisting of sulfonic acids having a hydroxyl group and sulfonic acids having an amino group.

11. The polyisocyanate composition according to Claim 8, wherein the nonionic compound is a polyalkylene glycol alkyl ether represented by general formula (I) shown below:

[Chemical formula 1]

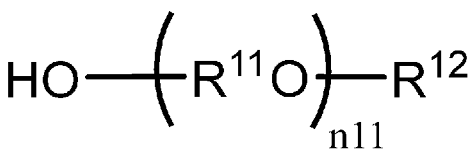 (I)

wherein in general formula (I), $R^{11}$ represents an alkylene group of at least 1 but not more than 4 carbon atoms, $R^{12}$ represents an alkyl group of at least 1 but not more than 4 carbon atoms, and n11 represents a number of at least 4.0 but not more than 20.

12. The polyisocyanate composition according to any one of Claims 7 to 11, wherein a modification rate by the hydrophilic compound is at least 0.15% by mass but not more than 50% by mass of the polyisocyanate composition.

13. A water-based coating composition comprising the polyisocyanate composition according to any one of Claims 1 to 12, and a resin that is dispersed or emulsified in water.

14. A coated substrate that has been coated with the water-based coating composition according to Claim 13.

Europäisches Patentamt
European Patent Office
Office européen des brevets

# EUROPEAN SEARCH REPORT

Application Number
EP 21 21 4702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 252 696 A (LAAS HANS J [DE] ET AL) 12 October 1993 (1993-10-12) * example 1 * & JP H05 222150 A (BAYER AG) 31 August 1993 (1993-08-31) ----- | 1-14 | INV. C08G18/08 C08G18/28 C08G18/62 C08G18/70 C08G18/73 C08G18/78 C08G18/79 C09D175/04 |
| X,D | JP H09 328654 A (ASAHI CHEMICAL IND) 22 December 1997 (1997-12-22) * examples 6,7,12,13 * ----- | 1-14 | |
| X | US 5 075 370 A (KUBITZA WERNER [DE] ET AL) 24 December 1991 (1991-12-24) * example 1c * & JP H02 105879 A (BAYER AG) 18 April 1990 (1990-04-18) ----- | 1-14 | |
| X | US 4 324 879 A (BOCK MANFRED ET AL) 13 April 1982 (1982-04-13) * examples 1-3 * ----- | 1-14 | |
| X,D | JP 2013 245341 A (ASAHI KASEI CHEMICALS CORP) 9 December 2013 (2013-12-09) * examples 1-6 * ----- | 1-14 | TECHNICAL FIELDS SEARCHED (IPC) |
| X | WO 2020/109189 A1 (COVESTRO DEUTSCHLAND AG [DE]) 4 June 2020 (2020-06-04) * page 19, line 23 - page 22, line 28 * ----- | 1-14 | C08G C09D |
| E | WO 2022/069561 A1 (COVESTRO DEUTSCHLAND AG [DE]) 7 April 2022 (2022-04-07) * page 27, line 22 - page 32, line 35 * ----- | 1-14 | |
| X | EP 3 428 207 A1 (ASAHI CHEMICAL IND [JP]) 16 January 2019 (2019-01-16) * paragraph [0181]; tables 1,2 * ----- -/-- | 1-14 | |

The present search report has been drawn up for all claims

1

| Place of search | Date of completion of the search | Examiner |
|---|---|---|
| Munich | 3 May 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 21 21 4702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/003282 A1 (ISL CHEMIE GMBH & CO KG [DE]; HENN JOACHIM [DE] ET AL.) 10 January 2008 (2008-01-10) * examples 1-3 * ----- | 1-14 | |
| X | WO 2016/170058 A1 (COVESTRO DEUTSCHLAND AG [DE]) 27 October 2016 (2016-10-27) * pages 28-32 * ----- | 1-14 | |
| X | WO 2014/009220 A1 (BAYER MATERIALSCIENCE AG [DE]) 16 January 2014 (2014-01-16) * tables 1,2 * ----- | 1-14 | |
| X | US 2003/078361 A1 (RICHTER FRANK [DE] ET AL) 24 April 2003 (2003-04-24) * tables 2-5 * ----- | 1-14 | |
| X | US 2020/002462 A1 (HECKING ANDREAS [DE] ET AL) 2 January 2020 (2020-01-02) * tables 1-5 * ----- | 1-14 | TECHNICAL FIELDS SEARCHED (IPC) |
| X | CA 2 244 486 A1 (BAYER AG [DE]) 6 February 1999 (1999-02-06) * tables 1,2 * ----- | 1-14 | |

The present search report has been drawn up for all claims

1

| Place of search | Date of completion of the search | Examiner |
|---|---|---|
| Munich | 3 May 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 21 21 4702

This annex lists the patent family members relating to the patent documents cited in the above-mentioned European search report. The members are as contained in the European Patent Office EDP file on
The European Patent Office is in no way liable for these particulars which are merely given for the purpose of information.

03-05-2022

| Patent document cited in search report | | Publication date | Patent family member(s) | | | Publication date |
|---|---|---|---|---|---|---|
| US 5252696 | A | 12-10-1993 | AT | 132515 | T | 15-01-1996 |
| | | | DE | 4136618 | A1 | 13-05-1993 |
| | | | EP | 0540985 | A1 | 12-05-1993 |
| | | | ES | 2084242 | T3 | 01-05-1996 |
| | | | JP | 2961475 | B2 | 12-10-1999 |
| | | | JP | H05222150 | A | 31-08-1993 |
| | | | KR | 930010074 | A | 22-06-1993 |
| | | | US | 5252696 | A | 12-10-1993 |
| | | | ZA | 928557 | B | 05-05-1993 |
| JP H09328654 | A | 22-12-1997 | JP | 4004085 | B2 | 07-11-2007 |
| | | | JP | H09328654 | A | 22-12-1997 |
| US 5075370 | A | 24-12-1991 | AT | 77397 | T | 15-07-1992 |
| | | | AU | 616795 | B2 | 07-11-1991 |
| | | | BR | 8904396 | A | 01-05-1990 |
| | | | CA | 1331667 | C | 23-08-1994 |
| | | | DE | 3829587 | A1 | 15-03-1990 |
| | | | EP | 0358979 | A2 | 21-03-1990 |
| | | | ES | 2032084 | T3 | 01-01-1993 |
| | | | JP | H0832851 | B2 | 29-03-1996 |
| | | | JP | H02105879 | A | 18-04-1990 |
| | | | US | 5075370 | A | 24-12-1991 |
| | | | ZA | 896671 | B | 27-06-1990 |
| US 4324879 | A | 13-04-1982 | CA | 1112243 | A | 10-11-1981 |
| | | | EP | 0010589 | A1 | 14-05-1980 |
| | | | ES | 483983 | A1 | 16-05-1980 |
| | | | JP | S5538380 | A | 17-03-1980 |
| | | | US | 4324879 | A | 13-04-1982 |
| JP 2013245341 | A | 09-12-2013 | JP | 6165419 | B2 | 19-07-2017 |
| | | | JP | 2013245341 | A | 09-12-2013 |
| WO 2020109189 | A1 | 04-06-2020 | NONE | | | |
| WO 2022069561 | A1 | 07-04-2022 | NONE | | | |
| EP 3428207 | A1 | 16-01-2019 | CN | 108699204 | A | 23-10-2018 |
| | | | EP | 3428207 | A1 | 16-01-2019 |
| | | | JP | 6568996 | B2 | 28-08-2019 |
| | | | JP | WO2017154963 | A1 | 13-12-2018 |
| | | | WO | 2017154963 | A1 | 14-09-2017 |
| WO 2008003282 | A1 | 10-01-2008 | DE | 102006031442 | A1 | 10-01-2008 |
| | | | EP | 2035517 | A1 | 18-03-2009 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 21 21 4702

This annex lists the patent family members relating to the patent documents cited in the above-mentioned European search report. The members are as contained in the European Patent Office EDP file on
The European Patent Office is in no way liable for these particulars which are merely given for the purpose of information.

03-05-2022

| Patent document cited in search report | Publication date | Patent family member(s) | Publication date |
|---|---|---|---|
| | | WO 2008003282 A1 | 10-01-2008 |
| WO 2016170058 A1 | 27-10-2016 | CN 107438635 A | 05-12-2017 |
| | | EP 3286241 A1 | 28-02-2018 |
| | | ES 2792903 T3 | 12-11-2020 |
| | | JP 6980531 B2 | 15-12-2021 |
| | | JP 2018516291 A | 21-06-2018 |
| | | KR 20170139021 A | 18-12-2017 |
| | | US 2018079855 A1 | 22-03-2018 |
| | | WO 2016170058 A1 | 27-10-2016 |
| WO 2014009220 A1 | 16-01-2014 | AU 2013289382 A1 | 22-01-2015 |
| | | AU 2013289383 A1 | 22-01-2015 |
| | | CA 2878407 A1 | 16-01-2014 |
| | | CA 2878428 A1 | 16-01-2014 |
| | | CN 104411416 A | 11-03-2015 |
| | | CN 104487177 A | 01-04-2015 |
| | | EP 2869940 A1 | 13-05-2015 |
| | | EP 2869941 A1 | 13-05-2015 |
| | | ES 2725568 T3 | 24-09-2019 |
| | | ES 2726111 T3 | 01-10-2019 |
| | | HK 1203442 A1 | 30-10-2015 |
| | | HK 1204304 A1 | 13-11-2015 |
| | | KR 20150034712 A | 03-04-2015 |
| | | KR 20150034713 A | 03-04-2015 |
| | | RU 2015103987 A | 27-08-2016 |
| | | RU 2015103989 A | 27-08-2016 |
| | | US 2015147577 A1 | 28-05-2015 |
| | | US 2015322290 A1 | 12-11-2015 |
| | | WO 2014009220 A1 | 16-01-2014 |
| | | WO 2014009221 A1 | 16-01-2014 |
| US 2003078361 A1 | 24-04-2003 | AT 437193 T | 15-08-2009 |
| | | BR 0209653 A | 13-07-2004 |
| | | CA 2446775 A1 | 21-11-2002 |
| | | CN 1509301 A | 30-06-2004 |
| | | DE 10123419 A1 | 21-11-2002 |
| | | EP 1389221 A1 | 18-02-2004 |
| | | ES 2329016 T3 | 20-11-2009 |
| | | HK 1067376 A1 | 08-04-2005 |
| | | JP 4029047 B2 | 09-01-2008 |
| | | JP 2004534870 A | 18-11-2004 |
| | | KR 20030095407 A | 18-12-2003 |
| | | MX PA03010376 A | 16-03-2004 |
| | | US 2003078361 A1 | 24-04-2003 |
| | | WO 02092656 A1 | 21-11-2002 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 21 21 4702

This annex lists the patent family members relating to the patent documents cited in the above-mentioned European search report. The members are as contained in the European Patent Office EDP file on
The European Patent Office is in no way liable for these particulars which are merely given for the purpose of information.

03-05-2022

| Patent document cited in search report | Publication date | Patent family member(s) | Publication date |
|---|---|---|---|
| US 2020002462 A1 | 02-01-2020 | CN 110312747 A | 08-10-2019 |
| | | EP 3585826 A1 | 01-01-2020 |
| | | JP 2020508380 A | 19-03-2020 |
| | | KR 20190118580 A | 18-10-2019 |
| | | US 2020002462 A1 | 02-01-2020 |
| | | WO 2018153801 A1 | 30-08-2018 |
| CA 2244486 A1 | 06-02-1999 | AT 268788 T | 15-06-2004 |
| | | CA 2244486 A1 | 06-02-1999 |
| | | DE 19734048 A1 | 11-02-1999 |
| | | EP 0896009 A1 | 10-02-1999 |
| | | ES 2222536 T3 | 01-02-2005 |
| | | JP 4106134 B2 | 25-06-2008 |
| | | JP H11152320 A | 08-06-1999 |
| | | KR 19990023374 A | 25-03-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI5222150 A
- JP HEI9328654 A
- JP HEI2105879 A
- JP 2013245341 A